(19) Europäisches Patentamt
European Patent Office
Office européen des brevets

(11) **EP 4 279 539 A1**

(12) **EUROPEAN PATENT APPLICATION**
published in accordance with Art. 153(4) EPC

(43) Date of publication:
**22.11.2023 Bulletin 2023/47**

(21) Application number: **22739475.6**

(22) Date of filing: **14.01.2022**

(51) International Patent Classification (IPC):
**C08J 9/16** $^{(2006.01)}$     **C08L 23/10** $^{(2006.01)}$

(52) Cooperative Patent Classification (CPC):
**C08J 9/16; C08L 23/10**

(86) International application number:
**PCT/JP2022/001031**

(87) International publication number:
**WO 2022/154070 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2021   JP 2021005316**

(71) Applicant: **Kaneka Corporation**
**Osaka-shi, Osaka 530-8288 (JP)**

(72) Inventors:
• **AMANO, Masaki**
  **Settsu-shi, Osaka 566-0072 (JP)**
• **NAKAYAMA, Kiyotaka**
  **Settsu-shi, Osaka 566-0072 (JP)**

(74) Representative: **Vossius & Partner**
**Patentanwälte Rechtsanwälte mbB**
**Siebertstraße 3**
**81675 München (DE)**

(54) **POLYPROPYLENE RESIN EXTRUDED FOAM PARTICLES, METHOD FOR PRODUCING SAME, AND FOAM MOLDED BODY**

(57)     An object is to provide, for example, polypropylene-based resin extruded expanded particles capable of providing a polypropylene-based resin foamed molded product which has excellent resistance to breakage. The polypropylene-based resin extruded expanded particles contain a base resin that contains a polypropylene-based resin having a branched structure and that has a specific melting point, a specific melt elongation, and a specific MFR.

## Description

Technical Field

The present invention relates to polypropylene-based resin extruded expanded particles and a method for producing the polypropylene-based resin extruded expanded particles, and a foamed molded product.

Background Art

A polypropylene-based resin foamed molded product obtained with use of polypropylene-based resin expanded particles has the characteristics of being excellent in, for example, the property of being formed in any shape, shock-absorbing properties, lightweight properties, and heat insulating properties. These characteristics are also the advantages of a polypropylene-based resin foamed molded product. Further, a polypropylene-based resin foamed molded product, the base material of which is a polypropylene-based resin, is excellent in chemical resistance, heat resistance, compressive strength, and strain recovery rate after compression. Because of having these advantages, a polypropylene-based resin foamed molded product has various uses such as heat insulating materials and shock-absorbing packing materials, in addition to automotive interior materials and automobile bumper core materials that are main uses thereof.

Polypropylene-based resin expanded particles can be produced typically by the method referred to as a "pressure-release expansion method", which is a method of dispersing, in water, polypropylene resin particles along with a volatile blowing agent inside a pressure-resistant vessel. In order to obtain polypropylene-based resin particles to be used in the pressure-release expansion method, it is necessary to use an extruder or the like to form, in advance of the use in the pressure-release expansion method, a polypropylene-based resin into pellets of a size suitable for expansion. This therefore means that in a case of using a polypropylene-based resin as a raw material to obtain polypropylene-based resin expanded particles by a pressure-release expansion method, two steps which are a pellet formation step and a pressure-release expansion step are required. As a result, there can be the following problems with the pressure-release expansion method: (i) the equipment investment tends to increase and (ii) the use of a dispersion medium such as water requires an effluent treatment facility.

For the purpose of overcoming these problems, it has been proposed in recent years to obtain polypropylene-based resin extruded expanded particles by an extrusion expansion method (e.g., Patent Literatures 1 to 3).

In addition, it has also been proposed to use a modified polypropylene resin obtained by modifying a polypropylene-based resin in producing polypropylene-based resin extruded expanded particles (e.g., Patent Literature 4).

Citation List

[Patent Literature]

[Patent Literature 1]
Japanese Patent Application Publication, Tokukai, No. H9-302131
[Patent Literature 2]
Japanese Patent Application Publication, Tokukai, No. 2009-256460
[Patent Literature 3]
International Publication No. 2018/016399
[Patent Literature 4]
International Publication No. 2020/004429

Summary of Invention

Technical Problem

However, the above conventional techniques have not been satisfactory, from the viewpoint of providing a polypropylene-based resin foamed molded product having excellent resistance to breakage, in a case of using extruded expanded particles to produce a foamed molded product, the extruded expanded particles being obtained by the production in which a modified polypropylene-based resin (e.g., a polypropylene-based resin having a branched structure) is used.

An embodiment of the present invention has been made in the light of the above problem, and an object thereof is to provide polypropylene-based resin extruded expanded particles capable of providing a polypropylene-based resin foamed molded product having excellent resistance to breakage and a method for producing the polypropylene-based resin extruded expanded particles, and a polypropylene-based resin foamed molded product having excellent resistance to breakage.

Solution to Problem

Specifically, an embodiment of the present invention provides polypropylene-based resin extruded expanded particles including a base resin that contains a polypropylene-based resin having a branched structure, the base resin having all of the following (i) to (iii):

(i) a melting point $Tm_1$ of not less than 130.0°C and less than 143.0°C,
the melting point $Tm_1$ being determined by measurement through differential scanning calorimetry;
(ii) a melt elongation of 3.0 m/min to 30.0 m/min,
the melt elongation being determined by melt tension measurement at 230°C; and
(iii) a melt flow rate (MFR) of 1.0 g/10 minutes to 20.0 g/ 10 minutes,
the MFR being determined by measurement carried out under conditions that are a temperature of 230°C and a load of 2.16 kg, in accordance with ISO1133.

In addition, another embodiment of the present invention provides a polypropylene-based resin foamed molded product including extruded expanded particles which include a base resin that contains a polypropylene-based resin having a branched structure, the extruded expanded particles having an open cell ratio of not more than 15.0%, the polypropylene-based resin foamed molded product having a density (X) of 60 g/L to 300 g/L and a tensile elongation at break (Y) which satisfies Formula (1) below:

$$Y > 0.005 \times X^2 - 0.25 \times X + 38 \cdots (1)$$

Advantageous Effects of Invention

An embodiment of the present invention advantageously provides (a) polypropylene-based resin extruded expanded particles capable of providing a polypropylene-based resin foamed molded product having excellent resistance to breakage and (b) a method for producing the polypropylene-based resin extruded expanded particles, and (c) a polypropylene-based resin foamed molded product having excellent resistance to breakage.

Description of Embodiments

The following description will discuss an embodiment of the present invention. However, the present invention is not limited to the embodiment below. The present invention is not limited to the configurations described below, but may be altered in various ways within the scope of the claims by a person skilled in the art. The present invention also encompasses, in its technical scope, any embodiment or example derived by combining technical means disclosed in differing embodiments or examples. Further, a new technical feature can be formed by combining the technical means disclosed in differing embodiments. All of the academic documents and patent literatures listed herein are incorporated by reference herein. The expression "A to B", representing a numerical range, herein means "not less than A (inclusive of A and greater than A) and not more than B (inclusive of B and smaller than B)" unless otherwise specified herein.

A copolymer which includes structural units that are a structural unit derived from an $M^1$ monomer, a structural unit derived from an $M^2$ monomer, ... and an $M^n$ monomer (n is an integer not less than 3) is also referred to as an "$M^1/M^2/.../M^n$ copolymer" unless otherwise specified herein. The $M^1/M^2/.../M^n$ copolymer is not limited to any particular polymerization form unless otherwise explicitly stated, but may be a random copolymer, a block copolymer, or a graft copolymer.

[1. Technical idea of embodiment of present invention]

In order to obtain, by an extrusion expansion method, pre-expanded particles having a low open cell ratio and being capable of secondary molding, it is necessary to increase the melt tension of a polypropylene-based resin, which is poor. To this end, a means of using, as a base material, a modified polypropylene-based resin which has been subjected to certain modification treatment has been used (e.g., Patent Literatures 1 and 2).

In some cases, a foamed molded product obtained by molding polypropylene-based resin expanded particles is required to have excellent resistance to breakage (specifically, the amount of deformation at the time of sample breakage (tensile elongation at break) in a foamed molded product tensile test). According to the technique disclosed in Patent Literature 3, by carrying out sufficient modification, extruded expanded particles which exhibit good moldability are provided, with carbon dioxide being used as a blowing agent. As a result of a study conducted by the inventors of the present invention, it has been found that increasing the degree of modification to extruded expanded particles however causes the tendency to worsen the resistance, to breakage, of a foamed molded product obtained with use of the extruded expanded particles. That is to say, the inventors of the present invention have found on their own the following: in a case of the production (e.g., the technique disclosed in Patent Literature 3) of a foamed molded product with use of extruded expanded particles obtained by the production in which a modified polypropylene-based resin (e.g., a polypropylene-based resin having a branched structure) is used, there is a problem of possible insufficient resistance of the obtained foamed molded product to breakage.

An embodiment of the present invention has been made in the light of the above problem, and an object thereof is to provide polypropylene-based resin extruded expanded particles capable of providing a polypropylene-based resin foamed molded product having excellent resistance to breakage and a method for producing the polypropylene-based resin extruded expanded particles, and a polypropylene-based resin foamed molded product having excellent resistance to breakage.

[2. Polypropylene-based resin extruded expanded particles]

Polypropylene-based resin extruded expanded particles in accordance with an embodiment of the present invention includes a base resin that contains a polypropylene-based resin having a branched structure, the base resin having all of the following (i) to (iii):

(i) a melting point $Tm_1$ of not less than 130.0°C and less than 143.0°C,
the melting point $Tm_1$ being determined by measurement through differential scanning calorimetry;
(ii) a melt elongation of 3.0 m/min to 30.0 m/min,
the melt elongation being determined by melt tension measurement at 230°C; and
(iii) a melt flow rate (MFR) of 1.0 g/10 minutes to 20.0 g/ 10 minutes,
the MFR being determined by measurement carried out under conditions that are a temperature of 230°C and a load of 2.16 kg, in accordance with ISO1133.

By in-mold foam molding of the polypropylene-based resin extruded expanded particles in accordance with an embodiment of the present invention, it is possible to make a polypropylene-based resin foamed molded product. In the present specification, the "polypropylene-based resin extruded expanded particles" can be referred to as "extruded expanded particles", the "polypropylene-based resin extruded expanded particles in accordance with an embodiment of the present invention" can be referred to as the "present extruded expanded particles", and the "polypropylene-based resin foamed molded product" can be referred to as a "foamed molded product".

The present extruded expanded particles, which have the above features, have the advantage of being capable of providing polypropylene-based resin foamed molded product having excellent resistance to breakage. In addition, the present extruded expanded particles, which have the above features, further have the advantage of being capable of providing a polypropylene-based resin foamed molded product having a low open cell ratio. In the present specification, the resistance of the foamed molded product to breakage is evaluated on the basis of the tensile elongation at break of the foamed molded product. The measurement method of the tensile elongation at break will be discussed later.

(2-1. Base resin)

The base resin includes a polypropylene-based resin having a branched structure. Optionally, the base resin can further include an additive such as a cell nucleating agent. It can be said that the base resin is the resin component that substantially constitute the extruded expanded particles.

In the present specification, "polypropylene-based resin having a branched structure" is intended to mean: (a) the polypropylene-based resin that is composed of polypropylene-based resin molecules each of which has no branched structure introduced therein and that has some of the polypropylene-based resin molecules intermolecularly crosslinked; and (b) a polypropylene-based resin that is derived from a polypropylene-based resin which has no branched structure introduced therein and that is obtained by introducing, as a branched chain, a diene compound or the like which is other than (poly)propylene into the polypropylene-based resin which has no branched structure introduced therein. In the present specification, the "polypropylene-based resin which has no branched structure introduced therein" can be referred to as "linear polypropylene-based resin". The "polypropylene-based resin having a branched structure" can be referred to as "branched polypropylene-based resin". The "linear polypropylene-based resin" and the "branched polypropylene-based resin" can collectively be referred to as "polypropylene-based resin". It can be said that the linear polypropylene-based resin is a raw material of the branched polypropylene-based resin.

In the present specification, polypropylene-based resin is intended to mean the resin that contains a structural unit derived from a propylene monomer, in a proportion of not less than 50 mol% per 100 mol% of all structural units contained in the resin. In the present specification, the "structural unit derived from a propylene monomer" can also be referred to as a "propylene unit".

(Linear polypropylene-based resin)

The linear polypropylene-based resin may be (a) a homopolymer of propylene, (b) a block copolymer, an alternating copolymer, or a random copolymer that is a copolymer of propylene and a monomer other than propylene, or (c) a mixture of at least two thereof.

The linear polypropylene-based resin may include, in addition to the propylene unit, a structural unit derived from a monomer other than a propylene monomer in such a manner as to include such a structural unit in a quantity of one or more units or as to include one or more types of such structural units. The "monomer other than a propylene monomer" used in producing the linear polypropylene-based resin can be referred to as a "comonomer". The "structural unit derived from the monomer other than a propylene monomer" included in the linear polypropylene-based resin can be referred to as a "comonomer unit".

Examples of such a comonomer encompass: (a) an $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, or 1-decene; (b) a cyclic olefin such as cyclopentene, norbornene, or tetracyclo[6,2,11,8,13,6]-4-dodecene; (c) a diene such as 5-methylene-2-norbornene, 5-ethylidene-2-norbornene, 1,4-hexadiene, methyl-1,4-hexadiene, or 7-methyl-1,6-octadiene; and (d) a vinyl-based monomer such as vinyl chloride, vinylidene chloride, acrylonitrile, methacrylonitrile, vinyl acetate, acrylic acid, an acrylic ester, methacrylic acid, a methacrylic ester, maleic acid, maleic anhydride, a styrene-based monomer, vinyltoluene, or divinylbenzene.

Examples of the acrylic esters encompass methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic esters encompass methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomers encompass styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

The linear polypropylene-based resin includes a comonomer unit which is preferably a structural unit derived from an $\alpha$-olefin having 2 or 4 to 12 carbon atoms, more preferably a structural unit derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit derived from ethylene, 1-butene, isobutene, 1-pentene, 3-methyl-1-butene, 1-hexene, and/or 4-methyl-1-pentene, even more preferably a structural unit derived from ethylene, 1-butene, isobutene, and/or 1-pentene, and more particularly preferably a structural unit derived from ethylene and/or 1-butene. This configuration offers the following advantages: (a) a branched polypropylene-based resin having a high melt tension and a low gel fraction is obtained; and (b) the obtained branched polypropylene-based resin is capable of providing polypropylene-based resin extruded expanded particles having excellent moldability.

The linear polypropylene-based resin is preferably a random copolymer including the propylene unit and at least one type of comonomer unit which are randomly bound to each other, at least one type of comonomer unit being selected from the group consisting of ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene. This configuration offers the advantage of being capable of obtaining, with use of the obtained extruded expanded particles, a foamed molded product having a high tensile elongation at break.

The linear polypropylene-based resin is preferably a propylene-based homopolymer, a polypropylene-based block copolymer, and/or a polypropylene-based random copolymer, and more preferably a propylene homopolymer and/or a polypropylene-based random copolymer. This configuration offers the following advantages: (a) a branched polypropylene-based resin having a high melt tension and a low gel fraction is obtained; and (b) the obtained branched polypropylene-based resin is capable of providing polypropylene-based resin extruded expanded particles having excellent moldability.

The linear polypropylene-based resin includes the propylene unit in an amount which is preferably not less than 90 mol%, more preferably not less than 93 mol%, even more preferably not less than 94 mol%, and particularly preferably not less than 95 mol%, relative to 100 mol% of all structural units included in the linear polypropylene-based resin. This configuration offers the advantage that a branched polypropylene-based resin having a high melt tension and a low gel fraction is obtained.

Although the linear polypropylene-based resin has a melting point $Tm_2$ which is not particularly limited, the melting point $Tm_2$ of the linear polypropylene-based resin can affect the melting point of the base resin. Therefore, the melting point $Tm_2$ of the linear polypropylene-based resin is, for example, preferably 125.0°C to 148.0°C, more preferably 125.0°C to 145.0°C, more preferably 125.0°C to 143.0°C, more preferably 130.0°C to 143.0°C, more preferably not less than 130.0°C and less than 143.0°C, more preferably 130.0°C to 142.0°C, more preferably 130.0°C to 140.0°C, even more preferably 131.0°C to 140.0°C, and particularly preferably, 132.0°C to 138.0°C. The melting point $Tm_2$ of the linear polypropylene-based resin being within the above range offers the advantage that the obtained extruded expanded particles is capable of providing a polypropylene-based resin foamed molded product having excellent resistance to breakage. In addition, (a) the melting point $Tm_2$ of the linear polypropylene-based resin being not less than 125.0°C offers the following advantages: there is no possibility of a decrease in the dimensional stability of the foamed molded product; there is no possibility of the foamed molded product having insufficient heat resistance; and the tendency of the foamed molded product to have an increased compressive strength, and (b) the melting point $Tm_2$ of the linear polypropylene-based resin being not more than 148.0°C, which allows the molding of the extruded expanded particles at a relatively low steam pressure, offers the advantage of allowing the molding of the extruded expanded particles with use of a general-purpose molding machine for polypropylene-based resin expanded particles.

The melting point $Tm_2$ of the linear polypropylene-based resin is determined by measurement in differential scanning calorimetry (hereinafter referred to as "DSC-method"). A specific operational procedure is as follows: (1) the temperature of 5 mg to 6 mg of the linear polypropylene-based resin is increased from 40°C to 220°C at a temperature increase rate of 10°C/minute so that the linear polypropylene-based resin is melted; (2) thereafter, the temperature of the linear polypropylene-based resin melted is decreased from 220°C to 40°C at a temperature decrease rate of 10°C/min so that the linear polypropylene-based resin is crystallized; and (3) thereafter, the temperature of the linear polypropylene-based resin crystallized is further increased from 40°C to 220°C at a temperature increase rate of 10°C/min. The temperature corresponding to the peak (melting peak) of the DSC-curve, obtained in the second temperature increase (i.e., in (3)), of the linear polypropylene-based resin can be determined as being the melting point $Tm_2$ of the linear polypropylene-based resin. Note that, in a case where as a result of carrying out the above-described method, there is more than one peak (melting peak) in the DSC curve, obtained in the second temperature increase, of the linear polypropylene-based resin, the temperature corresponding to the peak (melting peak) at which the quantity of melting heat is the greatest is defined as the melting point $Tm_2$ of the linear polypropylene-based resin. As the differential scanning calorimeter, a differential scanning calorimeter of, for example, a DSC6200 type available from Seiko Instruments Inc. can be used.

Although the MFR of the linear polypropylene-based resin is not particularly limited, the MFR of the linear polypropylene-based resin can affect the MFR of the base resin. Therefore, the MFR of the linear polypropylene-based resin is, for example, preferably 0.5 g/10 minutes to 22.0 g/10 minutes, more preferably 1.0 g/10 minutes to 20.0 g/10 minutes, more preferably 2.0 g/10 minutes to 15.0 g/10 minutes, more preferably 2.0 g/10 minutes to 12.0 g/10 minutes, even more preferably 2.0 g/ 10 minutes to 10.0 g/10 minutes, and particularly preferably 3.0 g/10 minutes to 9.0 g/10 minutes. The MFR of the linear polypropylene-based resin being within the above-described range offers the advantage that the obtained extruded expanded particles are capable of providing a polypropylene-based resin foamed molded product having excellent resistance to breakage. (a) The MFR of the linear polypropylene-based resin being not less than 0.5 g/10 minutes offers the advantage that the obtained branched polypropylene-based resin is capable of providing a foamed molded product which is less deformed and has good surface properties (beautiful surface), and (b) the MFR of the linear polypropylene-based resin being not more than 22.0 g/10 minutes offers the advantage that the composition has good expandability at the time of extrusion expansion.

In the present specification, the MFR of the linear polypropylene-based resin is determined by measurement carried out under conditions that are a temperature of 230°C and a load of 2.16 kg, in accordance with ISO1133.

(Branched polypropylene-based resin)

The branched polypropylene-based resin can be obtained by introducing a branched structure into the linear polypropylene-based resin described above. A method for introducing a branched structure into a linear polypropylene-based resin is not particularly limited, but examples of the method encompass (a1) a method of subjecting a linear polypropylene-based resin to irradiation and (a2) a method of melting and kneading a mixture that includes: the linear polypropylene-based resin; at least one type of monomer selected from the group consisting of a conjugated diene and a vinyl aromatic compound; and a radical polymerization initiator.

Specific examples of the method (a1) encompass a method disclosed in Published Japanese Translation of PCT International Application, Tokuhyo, No. 2002-542360.

Specific examples of the method (a2) encompass the preparation step described later.

In an embodiment of the present invention, the branched polypropylene-based resin is preferably a branched polypropylene-based resin obtained by the method (a2) because: (i) it is possible to stably introduce a branched structure into the linear polypropylene-based resin, and the reproducibility of introduction of a branched structure is high; and/or (ii) there is no need for complicated equipment and it is possible to obtain a branched polypropylene-based resin with high productivity. The branched polypropylene-based resin obtained by the method (a2) includes a structural unit derived from at least one type of monomer selected from the group consisting of a conjugated diene and a vinyl aromatic compound. In other words, the polypropylene-based resin having a branched structure preferably includes a structural unit derived from at least one type of monomer selected from the group consisting of a conjugated diene and a vinyl aromatic compound.

A structure of the branched polypropylene-based resin, the structure being derived from the linear polypropylene-based resin which is a raw material, is also referred to as a "main chain". Since each of the respects of the main chain of the branched polypropylene-based resin (e.g., the structural units included in the main chain and the amount of the propylene units contained in the main chain) is the same as that described in the section (Linear polypropylene-based resin), the description in the section is incorporated and the description of each respect is omitted here.

(Additional resin and rubber)

The base resin may further include: a resin (hereinafter also referred to as "additional resin") which is other than a branched polypropylene-based resin; and/or rubber, to the extent that the effect of an embodiment of the present invention is not impaired. The additional resin and the rubber may be collectively referred to as "additional resin, etc." Examples of the additional resin other than the branched polypropylene-based resin encompass (a) a linear polypropylene-based resin such as an ethylene/propylene random copolymer, an ethylene/propylene block copolymer, or a propylene homopolymer, (b) an ethylene-based resin such as high-density polyethylene, medium-density polyethylene, low-density polyethylene, linear low-density polyethylene, linear very-low-density polyethylene, an ethylene/vinyl acetate copolymer, an ethylene/acrylic acid copolymer, or an ethylene/methacrylic acid copolymer and (c) a styrene-based resin such as polystyrene, a styrene/maleic anhydride copolymer, or a styrene/ethylene copolymer. Examples of the rubber encompass olefin-based rubber such as ethylene/propylene rubber, ethylene/butene rubber, ethylene/hexene rubber, or ethylene/octene rubber. The total amount of the additional resin contained in the base resin is not particularly limited. For example, the total amount of the additional resin contained in the base resin is preferably 1 part by weight to 10 parts by weight, and more preferably 2 parts by weight to 5 parts by weight, relative to 100 parts by weight of the branched polypropylene-based resin. The total amount of the rubber contained in the base resin is not particularly limited. For example, the total amount of the rubber contained in the base resin is preferably 5 parts by weight to 30 parts by weight, and more preferably 10 parts by weight to 25 parts by weight, relative to 100 parts by weight of the branched polypropylene-based resin.

(Cell nucleating agent)

The base resin may include a cell nucleating agent. In other words, a cell nucleating agent may be used in producing the present extruded expanded particles. By using the cell nucleating agent, it is possible to control the number and the shape of the cells of the obtained polypropylene-based resin extruded expanded particles.

Examples of the cell nucleating agent can encompass a sodium bicarbonate-citric acid mixture, monosodium citrate, talc, and calcium carbonate. One of these cell nucleating agents may be used solely, or at least two of these cell nucleating agents may be used in combination.

The amount of the cell nucleating agent contained in the base resin, which is, in other words, the amount of the cell nucleating agent used in producing the extruded expanded particles, is not particularly limited. For example, the amount of the cell nucleating agent contained is preferably 0.01 parts by weight to 5.00 parts by weight, more preferably 0.01 parts by weight to 3.50 parts by weight, even more preferably 0.01 parts by weight to 1.00 parts by weight, and particularly preferably 0.01 parts by weight to 0.50 parts by weight, relative to 100 parts by weight of the polypropylene-based resin. This configuration offers the advantage that the extruded expanded particles have a uniform mean cell diameter and a uniform cell shape, and as a result, expandability at the time of extrusion expansion is easily stabilized.

(Additional component)

The base resin may further include an additional component as necessary. The additional component is as follows: (a) a stabilizer such as an antioxidant, a metal deactivator, a phosphorous processing stabilizer, an ultraviolet absorber, an ultraviolet stabilizer, a fluorescent brightening agent, metallic soap, or an antacid adsorbent, and/or (b) an additive such as a crosslinking agent, a chain transfer agent, a lubricant, a plasticizer, a filler, a reinforcer, a flame retardant, a coloring agent, or an antistatic agent. One of these additional component may be used solely, or at least two of these additional components may be used in combination. The total amount of the additional component contained in the base resin is not particularly limited. For example, the total amount of the another component contained in the base resin is, preferably 0.01 parts by weight to 50.00 parts by weight, and more preferably 0.05 parts by weight to 30.00 parts by weight, relative to 100 parts by weight of the branched polypropylene-based resin. Note that the "additional component" in the base resin is intended to mean a component other than the branched polypropylene-based resin (a), the additional resin, etc. (b), and the cell nucleating agent (c) in the base resin.

(Physical properties of base resin)

The following description will discuss the physical properties of the base resin. Note that the base resin included in the extruded expanded particles or the base resin included in the foamed molded product obtained from the extruded expanded particles, i.e., the base material that substantially constitutes the extruded expanded particles or the foamed molded product has physical properties which do not substantially vary by the operation of melting the extruded expanded particles or the foamed molded product under reduced pressure to cause the base resin to revert to a mass of resin. Therefore, the physical properties of the mass of resin obtained by melting, under reduced pressure, the extruded expanded particles or the foamed molded product obtained from the extruded expanded particles can be considered to be the physical properties of the base resin included in the extruded expanded particles or the foamed molded product. In the present specification, obtaining a mass of resin by melting, under reduced pressure, the extruded expanded particles or a foamed molded product obtained from the extruded expanded particles can be referred to as "reversion-to-resin". The mass of resin obtained by the reversion-to-resin may be referred to as "reversion resin".

A specific method for the reversion-to-resin is not particularly limited, but examples of thereof encompass the method in which the following steps (b1) through (b5) are carried out in sequence: (b1) the extruded expanded particles or the foamed molded product are put in a dryer having a temperature adjusted to 160°C; (b2) subsequently, the pressure inside the dryer is reduced to -0.05 MPa (gage pressure) to -0.10 MPa (gage pressure) over 5 to 10 minutes with use of a vacuum pump; (b3) thereafter, the extruded expanded particles are left to stand in the dryer for 30 minutes for preparation of a mass of resin (reversion resin); (b4) subsequently, the temperature in the dryer is cooled to room temperature, and the pressure in the dryer is then returned to normal pressure; and (b5) thereafter, the mass of resin is taken out of the dryer.

(Melting point $Tm_1$ of base resin)

The melting point $Tm_1$ of the base resin is not less than 130.0°C and less than 143.0°C, preferably 13.0°C to 142.0°C, more preferably 131.0°C to 141.0°C, more preferably 132.0°C to 140.0°C, even more preferably 133.0°C to 139.0°C, and particularly preferably 133.0°C to 136.0°C. The melting point $Tm_1$ of the base resin being within the above-described range offers the advantage that the obtained extruded expanded particles are capable of providing a polypropylene-based resin foamed molded product having excellent resistance to breakage. In addition, (a) the melting point $Tm_1$ of the base resin being not less than 130.0°C offers the following advantages: there is no possibility of a decrease in the dimensional stability of the foamed molded product; there is no possibility of the foamed molded product having insufficient heat resistance; and the tendency of the foamed molded product to have an increased compressive strength, and (b) the melting point $Tm_1$ of the base resin being less than 143.0°C, which allows the molding of the extruded expanded particles at a relatively low steam pressure, offers the advantage of allowing the molding of the extruded expanded particles with use of a general-purpose molding machine for polypropylene-based resin expanded particles.

The melting point $Tm_1$ of the base resin is determined by measurement in a differential scanning calorimetry (hereinafter referred to as "DSC-method"). As the differential scanning calorimeter, a differential scanning calorimeter of, for example, a DSC6200 type available from Seiko Instruments Inc. can be used.

An example of a method for measuring the melting point $Tm_1$ of the base resin by a differential scanning calorimetry is as follows: (1) the temperature of 5 mg to 6 mg of the reversion resin obtained by the reversion-to-resin of the extruded expanded particles or the foamed molded product is increased from 40°C to 220°C at a temperature increase rate of 10°C/minute so that the reversion resin is melted; (2) thereafter, the temperature of the reversion resin obtained is decreased from 220°C to 40°C at a temperature decrease rate of 10°C/minute so that the reversion resin is crystallized; (3) thereafter, the temperature of the reversion resin crystallized is further increased from 40°C to 220°C at a temperature increase rate of 10°C/minute. The temperature corresponding to the peak (melting peak) of the DSC-curve, obtained in the second temperature increase (i.e., in (3)), of the reversion resin can be determined as being the melting point $Tm_1$ of the base resin included in the extruded expanded particles or the foamed molded product. Note that, in a case where as a result of carrying out the above-described method, there is more than one peak (melting peak) in the DSC curve, obtained in the second temperature increase, of the reversion resin, the temperature corresponding to the peak (melting peak) at which the quantity of melting heat is the greatest is defined as the melting point $Tm_1$ of the base resin.

The melting point $Tm_1$ of the base resin can depend on the melting point of the branched polypropylene-based resin. The melting point of the branched polypropylene-based resin can depend on the melting point of the linear polypropylene-based resin, which is a raw material of the branched polypropylene-based resin. That is, the melting point $Tm_1$ of the base resin can be adjusted by changing the melting point of the linear polypropylene-based resin.

According to an embodiment of the present invention, in a case where there is more than one melting peak in the DSC curve of the reversion resin of the extruded expanded particles, the quantity of melting heat of the peak at which the quantity of melting heat is the largest is preferably not less than 75%, more preferably not less than 80%, even more preferably not less than 85%, and most preferably not less than 90%, of the total quantity of melting heat (100%) calculated from all melting peaks.

(Melt elongation)

The base resin has a melt elongation which is 3.0 m/min to 30.0 m/min, preferably 4.0 m/min to 25.0 m/min, more preferably 5.0 m/min to 20.0 m/min, even more preferably 6.0 m/min to 18.0 m/min, and particularly preferably 7.0 m/min to 16.0 m/min. The melt elongation of the base resin being within the above-described range offers the advantage that the obtained extruded expanded particles are capable of providing a polypropylene-based resin foamed molded product having excellent resistance to breakage. In addition, (a) the melt elongation of the base resin being not less than 3.0 m/min offers the advantage that the extruded expanded particles have good fusibility with each other at the time of molding of the extruded expanded particles, and the foamed molded product having a beautiful surface is thus likely to be obtained, and (b) the melt elongation of the base resin being not more than 30.0 m/min offers the advantage of a tendency to provide the extruded expanded particles having a low open cell ratio. Note that "min" is an abbreviation of "minute" and is intended to mean a "minute".

The melt elongation of the base resin is determined by melt tension measurement at 230°C. The melt elongation of the base resin is a value determined by melt tension measurement at 230°C in which used as a sample is, for example, the reversion resin obtained by reversion-to-resin of the extruded expanded particles or the foamed molded product. Used as a device for use in the melt tension measurement is a Capilograph 1D (manufactured by TOYO SEIKI SEISAKU-SHO, LTD) which is equipped with an attachment for melt tension measurement, which is equipped, at the front end thereof, with an orifice having a hole diameter ($\varphi$) of 1 mm and a length of 10 mm, and which includes a cylinder having a diameter ($\varphi$) of 10 mm. An example of a method of measuring, with use of the device, the melt elongation of the base resin is as follows: (1) the cylinder of the Capilograph is filled with the reversion resin obtained by the reversion-to-resin of the extruded expanded particles or the foamed molded product, the cylinder being set at 230°C and equipped, at the front end thereof, with an orifice having a diameter of 1 mm and a length of 10 mm; (2) the reversion resin with which the cylinder is filled is left to stand in the cylinder for 5 minutes, and the reversion resin is heated (preheated); (3) thereafter, a piston is lowered at a piston lowering speed of 10 mm/minute so that the reversion resin is discharged in the form of a strand through the orifice; (5) the reversion resin discharged in the form of a strand is pulled over a pulley which has a load cell and which is installed 350 mm below the orifice, and drawing of the reversion resin is started with a speed of 1 m/minute; (6) after the drawing of the reversion resin becomes stable, the drawing speed of the reversion resin is increased at a constant rate such that the drawing speed is increased from 1 m/min over 4 minutes to reach 200 m/min; (7) record the drawing speed at the moment at which the reversion resin in the form of a strand breaks; (8) the same operations are repeated 4 more times (5 times in total), and the arithmetic mean value of the drawing speeds for n=5 is determined as being the melt elongation.

(Melt flow rate (MFR))

The base resin has an MFR which is 1.0 g/10 minutes to 20.0 g/10 minutes, more preferably 2.0 g/10 minutes to 15.0 g/10 minutes, more preferably 2.0 g/10 minutes to 10.0 g/10 minutes, more preferably 2.0 g/10 minutes to 8.0 g/10 minutes, more preferably 2.0 g/10 minutes to 6.0 g/10 minutes, more preferably 2.0 g/10 minutes to 5.0 g/10 minutes, even more preferably 2.0 g/10 minutes to 4.0 g/10 minutes, and particularly preferably 2.0 g/10 minutes to 3.0 g/10 minutes. The MFR of the base resin being within the above-described range offers the advantage that the obtained extruded expanded particles are capable of providing a polypropylene-based resin foamed molded product having excellent resistance to breakage. (a) The MFR of the base resin being not less than 1.0 g/10 minutes offers the advantage that the obtained branched polypropylene-based resin is capable of providing a foamed molded product which is less deformed and has good surface properties (beautiful surface), and (b) the MFR of the base resin being not more than 20.0 g/10 minutes offers the advantage that the composition has good expandability at the time of extrusion expansion.

The MFR of the base resin is determined by measurement carried out under conditions that are a temperature of 230°C and a load of 2.16 kg, in accordance with ISO1133. The MFR of the base resin is determined by, for example, measurement carried out: with use of, as a sample, a resin obtained by melting (the reversion-to-resin of) extruded expanded particles or a foamed molded product; in compliance with the requirements of Procedure B described in ISO 1133 (1997); via Melt Indexer S-01 (manufactured by TOYO SEIKI SEISAKU-SHO, LTD); and under the conditions that are a temperature of 230°C and a load of 2.16 kg. The MFR of the base resin is the value obtained by conversion into the weight of the sample discharged through an orifice per 10 minutes on the basis of: a distance obtained by measurement of the travel distance of the piston of the Melt Indexer S-01 during a certain period of time; and the density of the sample at the temperature of the measurement. Note that the certain period of time is 120 seconds in a case where the melt flow rate is more than 0.1 g/10 minutes and not more than 1.0 g/10 minutes, 60 seconds in a case where the melt flow rate is more than 1.0 g/10 minutes and not more than 3.5 g/10 minutes, or 30 seconds in a case where the melt flow rate is more than 3.5 g/10 minutes and not more than 30.0 g/10 minutes.

(2-2. Polypropylene-based resin extruded expanded particles)

(Physical properties of extruded expanded particles)

The following description will discuss the physical properties of the extruded expanded particles. Note that the method of producing the polypropylene-based resin extruded expanded particles will be described in detail later.

(Bulk density of extruded expanded particles)

The present extruded expanded particles have a bulk density which is preferably 45 g/L to 600 g/L, more preferably 50 g/L to 250 g/L, even more preferably 55 g/L to 200 g/L, and particularly preferably 60 g/L to 150 g/L. This configuration offers the advantage that a polypropylene-based resin in-mold foamed molded product obtained with use of the extruded expanded particles exerts, to a greater degree, characteristics such as the property of being formed in any shape, shock-absorbing properties, lightweight properties, and heat insulating properties. In a case where the extruded expanded particles obtained by production of extruded expanded particles have an expansion ratio which does not fall within the above range, a method (e.g., the method disclosed in Japanese Patent Application Publication, Tokukai, No. H10-237212) can also be applied to the obtained extruded expanded particles, the method being increasing the expanding ratio of the obtained extruded expanded particles by pressurizing the insides of the obtained extruded expanded particles with an inert gas and then heating these extruded expanded particles.

In the present specification, the bulk density of the polypropylene-based resin extruded expanded particles is calculated by carrying out the following (1) to (3) in sequence: (1) a container having a known volume Vk (L), such as a graduated cylinder, a beaker, or a bucket, is filled with the extruded expanded particles to the brim; (2) the powder surface (the top surface) of the container is leveled, and the weight Wb (g) of the extruded expanded particles inside the container is measured; and (3) the bulk density of the extruded expanded particles is calculated from the following formula:

$$\text{Bulk density (g/L)} = \text{weight Wb (g) of expanded particles} / \text{volume Vk (L) of container.}$$

(Open cell ratio)

It is more preferable that the present extruded expanded particles have a lower open cell ratio. The open cell ratio of the present extruded expanded particles is preferably not more than 10.0%, more preferably not more than 9.0%, more preferably not more than 8.0%, more preferably not more than 7.0%, even more preferably not more than 6.0%, and particularly preferably not more than 5.0%. The lower limit of the open cell ratio of the present polypropylene-based resin extruded expanded particles is not particularly limited, and is, for example, not less than 0.0%. This configuration offers the following advantages (a) and (b): (a) the cells of the extruded expanded particles rarely break and contract at the time of the molding of the extruded expanded particles, and the extruded expanded particles are thus excellent in moldability; and (b) the foamed molded product obtained with use of the extruded expanded particles exerts, to a greater degree, characteristics such as the property of being formed in any shape, shock-absorbing properties, lightweight properties, compressive strength, and heat insulating properties.

In the present specification, the open cell ratio of the polypropylene-based resin extruded expanded particles is determined by measurement with use of an air-comparison pycnometer [Model 1000, available from TOKYO SCIENCE CO., LTD.] in accordance with the methods described in PROCEDURE C of ASTM D2856-87. Specifically, the open cell ratio of the extruded expanded particles is calculated by carrying out the following (1) to (3) in sequence: (1) the volume Vc (cm$^3$) of the extruded expanded particles is measured with use of the air-comparison pycnometer; (2) subsequently, all of the extruded expanded particles after the measurement of the Vc are submerged in ethanol contained in a graduated cylinder; (3) thereafter, the apparent volume Va (cm$^3$) of the extruded expanded particles is determined from the amount of increase in the position of the ethanol in the graduated cylinder; and (4) the open cell ratio of the extruded expanded particles is calculated by the following formula: The open cell ratio (%) = ((Va - Vc) × 100) / Va. This method of measuring the volume Va is also referred to as a submersion method.

(Crystallization peak)

Polypropylene-based resin extruded expanded particles obtained by the extrusion expansion method have the characteristic that a single crystallization peak is present in a DSC curve obtained by DSC measurement. In other words, it is highly probable that polypropylene-based resin expanded particles having the characteristic that a single crystallization peak is present in a DSC curve obtained by DSC measurement are those obtained by the extrusion expansion method. The present polypropylene-based resin extruded expanded particles can also have a single crystallization peak in a DSC curve obtained by DSC measurement.

The DSC curve of the polypropylene-based resin extruded expanded particles (or the polypropylene-based resin expanded particles) used to calculate the crystallization peak is a curve obtained by DSC measurement while the temperature of 5 mg to 6 mg of the polypropylene-based resin extruded expanded particles (or the polypropylene-based resin expanded particles) are increased from 40°C to 220°C at a temperature increase rate of 10°C/minute. The present specification provides the description of a case where a plurality of peaks are observed with respect to a DSC curve of the polypropylene-based resin extruded expanded particles (or the polypropylene-based resin expanded particles) used to calculate a crystallization peak. Unlike the case with the pressure-release expansion method, the polypropylene-based resin extruded expanded particles basically result in a single peak. However, a plurality of peaks can be observed, for example, in a case where the amount of the comonomer unit contained is great, or due to the addition of a crystalline resin, such as propylene. In this case, only a peak which indicates the quantity of heat accounting for not less than 15% of the total quantity of melting heat (100%) calculated from all of the peaks is considered as a crystallization peak of the polypropylene-based resin extruded expanded particles (or the polypropylene-based resin expanded particles). In other words, a peak which indicates the quantity of heat accounting for less than 15% of the total quantity of melting heat (100%) calculated from all of the peaks is not considered as a crystallization peak of the polypropylene-based resin extruded expanded particles (or the polypropylene-based resin expanded particles).

[3. Method of producing polypropylene-based resin extruded expanded particles]

A method of producing polypropylene-based resin extruded expanded particles in accordance with an embodiment of the present invention is a method, described in the section [2. Polypropylene-based resin extruded expanded particles], of producing polypropylene-based resin extruded expanded particles, the method including: a preparation step of preparing a polypropylene-based resin having a branched structure; and an extrusion-expansion step of preparing the polypropylene-based resin extruded expanded particles, the preparation step including a first melting and kneading step of melting and kneading a first mixture that includes: a linear polypropylene-based resin (a); at least one type of monomer N (b) selected from the group consisting of a conjugated diene and a vinyl aromatic compound; and a radical polymerization initiator (c), the extrusion-expansion step including a second melting and kneading step of melting and kneading a composition that includes a second mixture and a blowing agent, the second mixture including the polypropylene-based resin having a branched structure.

In the present specification, the "method of producing polypropylene-based resin extruded expanded particles in accordance with an embodiment of the present invention" can be referred to as the "present production method". In the present specification, the "at least one type of monomer N selected from the group consisting of a conjugated diene and a vinyl aromatic compound" can be referred to as a "monomer N" or "conjugated diene, etc.".

The present production method, which has the above configurations, has the advantage that it is possible to provide polypropylene-based resin extruded expanded particles capable of providing a polypropylene-based resin foamed molded product having excellent resistance to breakage. Further, with the present production method, which has the above configurations, it is possible to provide polypropylene-based resin extruded expanded particles that include a base resin having (i) a melting point $Tm_1$ of not less than 130.0°C and less than 143.0°C, (ii) a melt elongation of 3.0 m/min to 30.0 m/min, and (iii) a melt flow rate (MFR) of 1.0 g/10 minutes to 20.0 g/10 minutes.

(Linear polypropylene-based resin)

The linear polypropylene-based resin is as already described in the item (Linear polypropylene-based resin) of the section [2. Polypropylene-based resin extruded expanded particles].

(Monomer N (conjugated diene, etc.))

Examples of the conjugated diene compound encompass butadiene, isoprene, 1,3-heptadiene, 2,3-dimethylbutadiene, and 2,5-dimethyl-2,4-hexadiene. One of these conjugated diene compounds may be used solely, or at least two of these diene compounds may be used in combination. Among these conjugated diene compounds, butadiene, and isoprene are particularly preferable in terms of (a) inexpensiveness and handleability and (b) making a reaction easy to proceed uniformly.

Examples of the vinyl aromatic compound encompass styrene; methylstyrenes such as o-methylstyrene, m-methylstyrene, p-methylstyrene, α-methylstyrene, β-methylstyrene, dimethylstyrene, and trimethylstyrene; chlorostyrenes such as α-chlorostyrene, β-chlorostyrene, o-chlorostyrene, m-chlorostyrene, p-chlorostyrene, dichlorostyrene, and trichlorostyrene; bromostyrenes such as o-bromostyrene, m-bromostyrene, p-bromostyrene, dibromostyrene, and tribromostyrene; fluorostyrenes such as o-fluorostyrene, m-fluorostyrene, p-fluorostyrene, difluorostyrene, and trifluorostyrene; nitrostyrenes such as o-nitrostyrene, m-nitrostyrene, p-nitrostyrene, dinitrostyrene, and trinitrostyrene; vinylphenols such as o-hydroxystyrene, m-hydroxystyrene, p-hydroxystyrene, dihydroxystyrene, and trihydroxystyrene; divinylbenzenes such as o-divinylbenzene, m-divinylbenzene, and p-divinylbenzene; and isopropenyl styrenes such as o-diisopropenylbenzene, m-diisopropenylbenzene, and p-diisopropenylbenzene. Among the above-described vinyl aromatic compounds, styrene and/or methylstyrene are/is preferable in terms of (a) inexpensiveness and handleability and (b) making a reaction easy to proceed uniformly.

The monomer N preferably includes at least one selected from the group consisting of butadiene, isoprene, styrene, and methylstyrene, more preferably include at least one selected from the group consisting of butadiene and isoprene, and even more preferably include isoprene. This feature offers the advantages that (a) the monomer N is inexpensive and easy to handle and (b) the reaction of introducing a branched structure (crosslinked structure) into a polypropylene-based resin easily proceeds uniformly. The monomer N may consist of at least one selected from the group consisting of butadiene, isoprene, styrene, and methylstyrene, may consist of butadiene and isoprene, or may consist of isoprene.

The amount of the monomer N (conjugated diene, etc.) used in the first melting and kneading step is preferably 0.01 parts by weight to 5.00 parts by weight, more preferably 0.10 parts by weight to 3.00 parts by weight, and more preferably 0.10 parts by weight to 2.00 parts by weight, relative to 100 parts by weight of the linear polypropylene-based resin. When the amount of the monomer N (conjugated diene, etc.) used is greater, the branched polypropylene-based resin obtained tends to have a smaller MFR and a lower melt elongation, i.e., the base resin also tends to have a smaller MFR and a lower melt elongation. Conversely, when the amount of the monomer N (conjugated diene, etc.) used is smaller, the branched polypropylene-based resin obtained tends to have a greater MFR and has a higher melt elongation, i.e., the base resin tends to have a greater MFR and a higher melt elongation.

In the first melting and kneading step, a monomer copolymerizable with the monomer N (conjugated diene, etc.) may be used in combination, in addition to a random polypropylene resin, the monomer N (conjugated diene, etc.), and a radical polymerization initiator, to the extent that the effect of an embodiment of the present invention is not impaired. In other words, the resin mixture in the present production method may further include a monomer copolymerizable with the monomer N (conjugated diene, etc.). Examples of the monomer copolymerizable with the monomer N (conjugated diene, etc.) encompass (a) vinyl chloride, vinylidene chloride, acrylonitrile, methacrylonitrile, acrylamide, methacrylamide, vinyl acetate, acrylic acid, methacrylic acid, maleic acid, maleic anhydride, acrylic metal salt, methacrylic metal salt; (b) acrylic esters such as methyl acrylate, ethyl acrylate, butyl acrylate, 2-ethylhexyl acrylate, and stearyl acrylate; and (c) methacrylic esters such as methyl methacrylate, ethyl methacrylate, butyl methacrylate, 2-ethylhexyl methacrylate, and stearyl methacrylate.

(Radical polymerization initiator)

The radical polymerization initiator is an organic peroxide having the ability to abstract hydrogen from a polypropylene-based resin and a conjugated diene compound. Examples of the radical polymerization initiator suitably used in an embodiment of the present invention encompass organic peroxides such as ketone peroxide, peroxyketal, hydroperoxide, dialkyl peroxide, diacyl peroxide, peroxy carbonate, peroxy dicarbonate, and peroxy esters.

In particular, the organic peroxide is preferably an organic peroxide that has high hydrogen abstraction ability. Examples of the organic peroxides having high hydrogen abstraction ability encompass peroxy ketals such as 1,1-bis(t-butyl peroxy)3,3,5-trimethylcyclohexane, 1,1-bis(t-butyl peroxy)cyclohexane, n-butyl 4,4-bis(t-butyl peroxy)valerate, and 2,2-bis(t-butyl peroxy)butane; dialkyl peroxides such as dicumyl peroxide, 2,5-dimethyl-2,5-di(t-butyl peroxy)hexane, α,α'-bis(t-butyl peroxy-m-isopropyl) benzene, t-butyl cumyl peroxide, di-t-butyl peroxide, and 2,5-dimethyl-2,5-di(t-butyl peroxy)-3-hexyne; a diacyl peroxide such as benzoyl peroxide; peroxy esters such as t-butyl peroxy octoate, t-butyl peroxy isobutyrate, t-butyl peroxy laurate, t-butyl peroxy 3,5,5-trimethylhexanoate, 2, 5-dimethyl-2,5-di(benzoyl peroxy)hexane, t-butyl peroxy acetate, t-butyl peroxybenzoate, and di-t-butyl peroxy isophthalate; peroxycarbonate such as t-butylperoxy isopropyl carbonate. Among these organic peroxides, t-butylperoxy isopropyl carbonate and/or t-butyl peroxybenzoate are/is preferably. In other words, the radical polymerization initiator (c) preferably includes at least one selected from among t-butylperoxy isopropyl carbonate and t-butyl peroxybenzoate. One of these organic peroxides may be used solely, or at least two types of organic peroxides may be used in combination.

The amount of the radical polymerization initiator used in the first melting and kneading step is not particularly limited, but is preferably 0.01 parts by weight to 5.00 parts by weight, preferably 0.10 parts by weight to 3.00 parts by weight, preferably 0.30 parts by weight to 2.50 parts by weight, more preferably 0.50 parts by weight to 2.00 parts by weight, more preferably 0.50 parts by weight to 1.50 parts by weight, even more preferably 0.50 parts by weight to 1.00 parts by weight, and particularly preferably 0.55 parts by weight to 1.00 parts by weight, relative to 100 parts by weight of the linear polypropylene-based resin.

The following description will discuss the effect exerted, in the present production method, by the monomer N (conjugated diene, etc.) and the radical polymerization initiator on the melt elongation and the MFR of the base material of the branched polypropylene-based resin and extruded expanded particles obtained, with some inferences being included. Note that an embodiment of the present invention is in no way limited to the following description.

In the present production method, the radical polymerization initiator is a component which initiates a reaction by abstracting hydrogen on the main chain of the linear polypropylene-based resin (a). Typically, in a case where the linear polypropylene-based resin (a) and the radical polymerization initiator (c) are melted and kneaded, the hydrogen abstraction reaction is followed by the chain reaction of molecular chain scissions of the linear polypropylene-based resin (a), and therefore, the MFR of the base resin significantly increase.

In the present production method, the linear polypropylene-based resin (a) is used in combination with the radical polymerization initiator (c) and the monomer N (b) (conjugated diene, etc.). As a result, in the present production method, by the addition of the monomer N (b) (conjugated diene, etc.) to the linear polypropylene-based resin molecule that has undergone hydrogen abstraction reaction, the reaction of molecular chain scission of the above-described linear polypropylene-based resin can be inhibited. Further, in the present production method, by the progress of the reaction of addition of the monomer N (b) (conjugated diene, etc.) to the linear polypropylene-based resin molecule that has undergone hydrogen abstraction reaction, a branched structure derived from the monomer N (conjugated diene, etc.) is formed in the linear polypropylene-based resin. Further, in the present production method, a dimerization reaction proceeds among molecules of the linear polypropylene-based resin having formed therein the branched structure derived from the monomer N (conjugated diene, etc.), and as such a reaction proceeds, a crosslinked structure is generated among the molecules of the linear polypropylene-based resin. It is considered that by the progress of the series of reactions above, a branched polypropylene-based resin is obtained through the present production method. In addition, in parallel with the series of reactions, the reaction of molecular chain scission of the above-described linear polypropylene-based resin can also proceed. Thus, in the present production method, it is possible to adjust the melt elongations and the MFRs of the branched polypropylene resin obtained and the base resin of the extruded expanded particles obtained, by appropriately adjusting the amount of the monomer N (b) (conjugated diene, etc.) blended relative to the linear polypropylene-based resin (a) and the amount of the radical polymerization initiator (c) blended relative to the linear polypropylene-based resin (a).

It can be said that the radical polymerization initiator is a component which determines the degree of progress of the above reaction of molecular chain scission of the linear polypropylene-based resin and the degree of progress of the above reaction of production of a branched structure derived from the monomer N (conjugated diene, etc.) and/or a crosslinked structure of the linear polypropylene-based resin. In this respect, increasing the amount of the radical polymerization initiator added has the effect of increasing the degrees of progress of both the reactions above. Thus, in the present production method, it is preferable to use the radical polymerization initiator in an amount necessary to cause the reaction of production of the branched structure and/or the crosslinked structure to sufficiently occur. Note that as the reaction of production of the branched structure and/or the crosslinked structure increases, the branched polypropylene resin obtained and the base resin of the extruded expanded particles obtained tend to have reduced melt elongations and reduced MFRs. Further, it is possible to adjust the balance of the degree of progress between the reaction of molecular chain scission and the reaction of production of the branched structure and/or the crosslinked structure, by changing the ratio of the amount (part by weight) of the monomer N (conjugated diene, etc.) used to the amount (part by weight) of the radical polymerization initiator (the amount of the monomer N (conjugated diene, etc.) used / the amount of the radical polymerization initiator used).

In a case where the amount of the radical polymerization initiator used is constant, as the ratio of (the amount of the monomer N (conjugated diene, etc.) used / the amount of the radical polymerization initiator used) is increased, the reaction of production of the branched structure and/or the crosslinked structure takes precedence over the reaction of molecular chain scission. As a result, as the ratio is increased, the branched polypropylene resin obtained and the base resin of the extruded expanded particles obtained tend to have lower melt elongations and smaller MFRs. As the ratio (the amount of the monomer N (conjugated diene, etc.) used / the amount of the radical polymerization initiator used) is decreased, the reaction of molecular chain scission takes precedence over the reaction of production of the branched structure and/or the crosslinked structure. As a result, as the ratio is increased, the branched polypropylene resin obtained and the base resin of the extruded expanded particles tend to have higher melt elongations and greater MFRs.

The ratio (the amount of the monomer N (conjugated diene, etc.) used / the amount of the radical polymerization initiator used) is not particularly limited, but is preferably 0.05 to 5.00, more preferably 0.10 to 3.00, even more preferably 0.20 to 2.00, more preferably 0.25 to 1.00, more preferably 0.26 to 0.80, even more preferably not less than 0.27 and less than 0.60, even more preferably 0.28 to 0.50, and particularly preferably 0.28 to 0.45. With this configuration, it is possible to obtain extruded expanded particles that include a base resin having a melt elongation and an MFR which are within the above-described ranges, As a result, it is possible to obtain a foamed molded product having excellent resistance to breakage.

As described above, it is possible to adjust the melt elongations and the MFRs of the branched polypropylene resin obtained and the base resin extruded expanded particles obtained within the scope of an embodiment of the present invention, by adjusting, as appropriate, the amounts of the linear polypropylene-based resin (a), the monomer N (b) (conjugated diene, etc.), and the radical polymerization initiator (c) used. In addition, it is possible to obtain extruded expanded particles having a low open cell ratio and it is possible to obtain extruded expanded particles capable of providing a foamed molded product having excellent resistance to breakage, by adjusting the melt elongation and the MFR of the base resin of the extruded expanded particles within the scope of an embodiment of the present invention,.

(Additional component)

The resin mixture may further include an additional component as necessary. The additional component is as follows: (a) a stabilizer such as an antioxidant, a metal deactivator, a phosphorous processing stabilizer, an ultraviolet absorber, an ultraviolet stabilizer, a fluorescent brightening agent, metallic soap, or an antacid adsorbent, and/or (b) an additive such as a cell adjusting agent, a coloring agent, a crosslinking agent, a chain transfer agent, a lubricant, a plasticizer, a filler, a reinforcer, a flame retardant, or an antistatic agent. One of these additional component may be used solely, or at least two of these additional components may be used in combination.

(3-1. Preparation step)

It can also be said that the preparation step is a step of preparing a polypropylene-based resin having a branched structure (branched polypropylene-based resin) with use of at least one type of monomer selected from the group consisting of a conjugated diene and a vinyl aromatic compound.

(First melting and kneading step)

It can also be said that the first melting and kneading step is a step of preparing a melted and kneaded product of the first mixture that includes the linear polypropylene-based resin (a), the monomer N (b) (conjugated diene, etc.), and the radical polymerization initiator (c).

The device which can be used in the first melting and kneading step includes a melting and kneading device for melting and kneading the first mixture. Examples of such a melting and kneading device encompass (a) kneaders such as a roller mill, a Ko-kneader, a Banbury mixer, a Brabender, a single screw extruder having a single screw, and a multi-screw extruder having multiple screws (e.g., a twin screw extruder having two screws), (b) horizontal stirrers such as a multi-screw surface renewal device and a multi-screw multi-disk device; and (c) a vertical stirrer such as a double helical ribbon stirrer. Among these devices, it is preferable to use the kneaders as the melting and kneading device, in terms of the capability to continuously knead the first mixture and the easiness of scale-up, and among the kneaders, it is more preferable to use the extruders, it is even more preferable to use the multi-screw extruder, and it is particularly preferable to use a twin screw extruder, in terms of productivity. In other words, the first melting and kneading step is preferably a step of melting and kneading the first mixture with use of a twin screw extruder.

A device (e.g., the melting and kneading device) which can be used in the first melting and kneading step preferably has a die provided at the end of the device in the extruding direction. The die includes at least one hole (which can also be referred to as a discharge hole) for discharging the first mixture that has been melted and kneaded. The number and diameter of the hole of the die and the thickness of the die (the length of the hole in the extruding direction) are not particularly limited.

The melted and kneaded product, obtained in the first melting and kneading step, of the first mixture is a branched polypropylene-based resin.

(First mixture preparation step)

The preparation step may include a first mixture preparation step of obtaining a first mixture before the melting and kneading step. In the first mixture preparation step, the order and the method in which the first mixture is obtained by mixing the linear polypropylene-based resin (a), the monomer N (b) (conjugated diene, etc.), and the radical polymerization initiator (c) are not particularly limited, but examples thereof include the following methods (m1) to (m4):

(m1) a method for preparing the first mixture by mixing the linear polypropylene-based resin that is unmelted, the monomer N (conjugated diene, etc.), and the radical polymerization initiator, simultaneously or in no particular order;

(m2) a method for preparing the first mixture by feeding, into a device, the linear polypropylene-based resin that is unmelted so that this linear polypropylene-based resin is melted and kneaded, and thereafter, feeding, simultaneously or separately, the monomer N (conjugated diene, etc.) and the radical polymerization initiator, into the linear polypropylene-based resin that has been partially or completely melted and kneaded;

(m3) a method for preparing the first mixture by feeding, into a device, the linear polypropylene-based resin that is unmelted and the radical polymerization initiator simultaneously or separately so that these linear polypropylene-based resin and radical polymerization initiator are melted and kneaded, and thereafter, feeding the monomer N (conjugated diene, etc.) into the linear polypropylene-based resin and the radical polymerization initiator that have been partially or completely melted and kneaded; and

(m4) a method for preparing the first mixture by feeding, into a device, the linear polypropylene-based resin that is unmelted and the monomer N (conjugated diene, etc.) simultaneously or separately, so that these linear polypropylene-based resin and monomer N (conjugated diene, etc.) are melted and kneaded, and thereafter, feeding the radical polymerization initiator into the linear polypropylene-based resin and the monomer N (conjugated diene, etc.) that has been partially or completely melted and kneaded.

Since the polypropylene-based resin in the first mixture is in a partially or completely melt state at the beginning of the melting and kneading step, the methods (m2) to (m4) are preferable. The device used in the method (m2) through (m4) may be the same as the device used in the subsequent first melting and kneading step. Sequentially carrying out the first mixture preparation step and the melting and kneading step in the same device offers the advantages in terms of, for example, efficiency and the environment. The monomer N (conjugated diene, etc.) is typically highly volatile. It is therefore desirable that the monomer N be added in a manner which prevents the emission of the monomer N. Thus, because the reaction easily proceeds uniformly in the melting and kneading step, the method (m3) is more preferable, and the following method is even more preferable: a method for preparing the first mixture by: feeding, into a device, the linear polypropylene-based resin that is unmelted so that this linear polypropylene-based resin is melted and kneaded; thereafter, feeding the radical polymerization initiator into the linear polypropylene-based resin that is partially or completely melted and kneaded so that these linear polypropylene-based resin and radical polymerization initiator are melted and kneaded; and feeding the monomer N (conjugated diene, etc.) into the linear polypropylene-based resin and the radical polymerization initiator that are partially or completely melted and kneaded.

(Discharge step)

The preparation step may further include a discharge step of discharging, through the die of the device, the melted and kneaded product, obtained in the first melting and kneading step, of the first mixture a melting and kneading step of the first mixture, i.e., the branched polypropylene-based resin. In the discharge step, at a temperature that allows the branched polypropylene-based resin to be discharged through the hole in the die, the branched polypropylene-based resin is discharged in the form of a strand through the die. It is possible to obtain the branched polypropylene-based resin that has a desired shape and size, by cooling and cutting the branched polypropylene-based resin (also referred to as merely "strand") discharged in the form of a strand. The method of cooling the strand is not particularly limited, but examples thereof include water cooling with use of water. The strand may be cut after being cooled or may be cooled and cut simultaneously.

(3-2. Extrusion-expansion step)

It can also be said that the extrusion-expansion step is a step of expanding a second mixture which includes the branched polypropylene-based resin.

(Second melting and kneading step)

It can be said that the second melting and kneading step is a step of preparing a melted and kneaded product (which can hereinafter be referred to as the melted and kneaded composition) of a composition that includes: a blowing agent; and the second mixture which includes the branched polypropylene-based resin. In the second melting and kneading step, it is only required that the composition be melted and kneaded at last, the composition including: the blowing agent; and the second mixture which includes the branched polypropylene-based resin. Specific examples of the second melting and kneading step encompass the following methods (n1) through (n3):

(n1) a method of mixing or blending the branched polypropylene-based resin and the blowing agent along with the additional resin, etc., the cell nucleating agent, and the additional component that are optional, to prepare a composition, and then melting and kneading the composition;

(n2) a method of mixing or blending the branched polypropylene-based resin and the blowing agent and melting and kneading a composition thereby obtained, then optionally adding the additional resin, etc., the cell nucleating agent, and the additional component to the composition, and then further melting and kneading a composition thereby obtained; and

(n3) a method of (n3-1) mixing or blending the branched polypropylene-based resin along with the additional resin, etc., the cell nucleating agent, and the another component that are optional, to prepare the second mixture, and then melting and kneading the second mixture, and (n3-2) adding the blowing agent to the second mixture thereby obtained to prepare a composition and then further melting and kneading the composition.

In any of the above-described methods (n1) to (n3), the method and the order in which added are the additional resin, etc., the cell nucleating agent, and the additional component that are optionally used are not particularly limited. The additional resin, etc., the cell nucleating agent, and the additional component that are optionally used may be added simultaneously, or may be added separately and in no particular order.

The second melting and kneading step may further include a step of after melting and kneading the composition by, for example, any of the above-described methods (n1) through (n3), decreasing the temperature of the melted and kneaded composition such that the temperature falls within a range in which the melted and kneaded composition does not solidify.

Examples of a device used in the second melting and kneading step encompass a melting and kneading device for melting and kneading the second mixture. The melting and kneading device used in the second melting and kneading step includes a melting and kneading device which is exemplified by the first melting and kneading step. As in the first melting and kneading step, it is preferable to use the kneaders as the melting and kneading device used in the second melting and kneading step. Among the kneaders, it is more preferable to use the extruders in terms of productivity, it is even more preferable to use a multi-screw extruder, and it is particularly preferable to use a twin screw extruder. Using the extruders as the melting and kneading device in the second melting and kneading step offers the advantage that the blowing agent that has been injected does not flow back to the upstream of the device due to the screw configuration of the extruders.

The device (e.g., the melting and kneading device) which can be used in the second melting and kneading step preferably has a die provided at the end of the device in the extruding direction. The die is as described in the section (First melting and kneading step).

The device which can be used in the second melting and kneading step may further include a cooling device provided between the melting and kneading device and the die for decreasing the temperature of the melted and kneaded composition. Examples of the cooling device can encompass a single screw extruder, a static mixer, and a melt cooler which are provided downstream of the melting and kneading device. One of the above cooling devices may be used solely, or at least two of these cooling devices may be used in combination. The device which can be used in the second melting and kneading step may further include a gear pump provided between the melting and kneading device and the die (e.g., between the melting and kneading device and the cooling device and/or between the cooling device and the die) for increasing the stability of discharge of the composition. The device which can be used in the second melting and kneading step may further include a diverter valve provided between the melting and kneading device and the die.

(Blowing agent)

A blowing agent which can be used in the present production method is not particularly limited, provided that the blowing agent is commonly used in extrusion expansion. Examples of the blowing agent encompass: (a) physical blowing agents such as (a-1) aliphatic hydrocarbons such as propane, normal butane, isobutane, normal pentane, isopentane, and hexane, (a-2) alicyclic hydrocarbons such as cyclopentane and cyclobutane, (a-3) ethers such as dimethyl ether, diethyl ether, and methyl ethyl ether, (a-4) alcohols such as methanol and ethanol, (a-5) inorganic gases such as air, nitrogen and carbon dioxide, and (a-6) water; and (b) chemical blowing agents that encompass pyrolytic blowing agents such as sodium bicarbonate, azodicarbonamide, and dinitroso pentamethylene tetramine.

In the present production method, in terms of low production costs and low load on the environment, the blowing agent is preferably inorganic gas and more preferably carbon dioxide. In other words, the blowing agent preferably includes carbon dioxide. In addition, in terms of low production costs and low load on the environment, it is preferable that only carbon dioxide be used as a blowing agent and the blowing agents that are described above as examples of the blowing agent and that are other than carbon dioxide should not substantially be included. Specifically, the amount of a substance contained in the composition, the substance being capable of functioning as the blowing agent and being other than carbon dioxide, is preferably not more than 0.01 parts by weight, more preferably not more than 0.001 parts by weight, even more preferably not more than 0.0001 parts by weight, and particularly preferably 0 parts by weight, relative to 100 parts by weight of the composition.

The amount of the blowing agent used in the second melting and kneading step is preferably 0.5 parts by weight to 7.0 parts by weight, more preferably 0.5 parts by weight to 6.0 parts by weight, more preferably 0.5 parts by weight to 5.0 parts by weight, even more preferably 0.5 parts by weight to 4.0 parts by weight, and particularly preferably 0.5 parts by weight to 3.0 parts by weight, relative to 100.0 parts by weight of the second mixture. In a case where the bulk density of the extruded expanded particles targeted is within the range of 100 g/L to 600 g/L, the amount of the blowing agent used in the second melting and kneading step is preferably 0.5 parts by weight to 3.0 parts by weight, more preferably 1.0 part by weight to 3.0 parts by weight, more preferably 1.5 parts by weight to 2.5 parts by weight, and even more preferably 1.5 parts by weight to 2.0 parts by weight, relative to 100.0 parts by weight of the second mixture. In a case where the bulk density of the extruded expanded particles targeted is within the range of 45 g/L to 100 g/L, the amount of the blowing agent used in the second melting and kneading step is preferably 3.0 parts by weight to 7.0 parts by weight, more preferably 4.0 parts by weight to 6.0 parts by weight, and even more preferably 5.0 parts by weight to 6.0 parts by weight, relative to 100.0 parts by weight of the second mixture.

(Extrusion step)

The expansion step may further include an extrusion step of extruding the melted and kneaded composition into a region the pressure of which is lower than the pressure inside the device, for example, through the die provided in the device. In the extrusion step, the melted and kneaded composition may be extruded into a gas phase or may be extruded into a liquid phase.

(Cut step)

The expansion step may further include a cut step of cutting the composition extruded in the extrusion step. The composition extruded into a region the pressure of which is lower than the pressure inside the device in the extrusion step, for example, through the die provided in the device, starts to expand immediately. In the cut step, the composition which is expanding may be cut, or the composition which has finished expanding may be cut. In a case where the composition which is expanding is cut, the cut composition can complete the expansion in the region into which the composition is extruded. It can also be said that the cut step is a step of cutting the composition in particulate form to prepare the polypropylene-based resin extruded expanded particles.

A method for cutting the extruded composition is not particularly limited. For example, the composition may be cut with use of a cutter or the like which is provided downstream of the die along the extruding direction. The number of blades of the cutter is also not particularly limited.

[4. Polypropylene-based resin foamed molded product]

A polypropylene-based resin foamed molded product in accordance with an embodiment of the present invention includes extruded expanded particles which include a base resin that contains a polypropylene-based resin having a branched structure, the extruded expanded particles having an open cell ratio of not more than 15.0%, the polypropylene-based resin foamed molded product having a density (X) of 60 g/L to 300 g/L and a tensile elongation at break (Y) which satisfies Formula (1) below:

$$Y > 0.005 \times X^2 - 0.25 \times X + 38 \cdots (1)$$

In the present specification, the "polypropylene-based resin foamed molded product in accordance with an embodiment of the present invention" can be referred to as the "present foamed molded product".

The following description will discuss embodiments of the present foamed molded product. The items (e.g., base resin and open cell ratio) other than those described below in detail will be described with the descriptions in the sections [2. Polypropylene-based resin extruded expanded particles] and [3. Method of producing polypropylene-based resin extruded expanded particles] being employed as appropriate.

The polypropylene-based resin foamed molded product in accordance with an embodiment of the present invention, which has the above-described features, has the advantage of having excellent resistance to breakage when having a density of a specific range.

A method for producing the polypropylene-based resin foamed molded product in accordance with an embodiment of the present invention, that is, a method for molding extruded expanded particles, is not particularly limited. For example, a known in-mold foam molding method can be employed.

(Density (X) of foamed molded product)

The density (X) of the present foamed molded product is 60 g/L to 300 g/L, preferably 65 g/L to 300 g/L, more preferably 70 g/L to 300 g/L, even more preferably 75 g/L to 250 g/L, and particularly preferably 75 g/L to 200 g/L. This configuration offers the advantage that the foamed molded product is more excellent in characteristics such as the property of being formed in any shape, shock-absorbing properties, lightweight properties, and heat insulating properties.

In the present specification, the density (X) of the polypropylene-based resin foamed molded product is calculated by carrying out the following (1) to (3) in sequence: (1) the weight Ws (g) of the foamed molded product is measured; (2) the length, width, and thickness of the foamed molded product are measured with use of a vernier caliper, and the volume Vs ($cm^3$) of the foamed molded product is calculated; and (3) the density of the foamed molded product is calculated from the following formula:

$$\text{Density (X) (g/L) of foamed molded product} = \text{Ws} / \text{Vs} \times 1000.$$

(Tensile elongation at break (Y))

It is more preferable that the tensile elongation at break (Y) (%) of the present foamed molded product be greater. The tensile elongation at break (Y) (%) of the foamed molded product being greater means that the foamed molded product has more excellent resistance to breakage.

In the present specification, the tensile elongation at break (Y) (%) of the polypropylene-based resin foamed molded product is defined as the value determined from the results of a tensile test carried out in accordance with ISO 1798, with the use of the foamed molded product as a sample. Specifically, in the tensile test with use of the foamed molded product, the value of the tensile elongation at the time of break of the foamed molded product is measured, and the measurement value is defined as the tensile elongation at break (Y) (%) of the foamed molded product.

A polypropylene-based resin foamed molded product in accordance with another embodiment of the present invention may have the following features: a polypropylene-based resin foamed molded product produced by molding either the polypropylene-based resin extruded expanded particles described in the section [2. Polypropylene-based resin extruded expanded particles] or polypropylene-based resin extruded expanded particles obtained by the production method described in the section [3. Method of producing polypropylene-based resin extruded expanded particles], the polypropylene-based resin extruded expanded particles having an open cell ratio of not more than 15.0%, the polypropylene-based resin foamed molded product having a density (X) of 60 g/L to 300 g/L and a tensile elongation at break (Y) which satisfies Formula (1) below:

$$Y > 0.005 \times X^2 - 0.25 \times X + 38 \cdots (1)$$

<1> Polypropylene-based resin extruded expanded particles including a base resin that contains a polypropylene-based resin having a branched structure, the base resin having all of the following (i) to (iii):

(i) a melting point $Tm_1$ of not less than 130.0°C and less than 143.0°C,
the melting point $Tm_1$ being determined by measurement through differential scanning calorimetry;
(ii) a melt elongation of 3.0 m/min to 30.0 m/min,
the melt elongation being determined by melt tension measurement at 230°C; and
(iii) a melt flow rate (MFR) of 1.0 g/ 10 minutes to 20.0 g/ 10 minutes,
the MFR being determined by measurement carried out under conditions that are a temperature of 230°C and a load of 2.16 kg, in accordance with ISO1133.

<2> The polypropylene-based resin extruded expanded particles described in <1>, in which the polypropylene-based resin extruded expanded particles have the following (iv) and (v):

> (iv) a bulk density of 45 g/L to 600 g/L; and
> (v) an open cell ratio of not more than 10.0%.

<3> The polypropylene-based resin extruded expanded particles described in <1> or <2>, in which the polypropylene-based resin having a branched structure includes a structural unit derived from at least one type of monomer N selected from the group consisting of a conjugated diene and a vinyl aromatic compound.

<4> A method for producing the polypropylene-based resin extruded expanded particles described in any one of <1> to <3>, the method including a preparation step of preparing a polypropylene-based resin having a branched structure; and an extrusion-expansion step of preparing the polypropylene-based resin extruded expanded particles, the preparation step including a first melting and kneading step of melting and kneading a first mixture that includes a linear polypropylene-based resin (a), at least one type of monomer N (b) selected from the group consisting of a conjugated diene and a vinyl aromatic compound, and a radical polymerization initiator (c), the extrusion-expansion step including a second melting and kneading step of melting and kneading a composition that includes a second mixture and a blowing agent, the second mixture including the polypropylene-based resin having a branched structure.

<5> The method described in <4>, in which the linear polypropylene-based resin (a) has a melting point $Tm_2$ of 125.0°C to 148.0°C.

<6> The method described in <4> or <5>, in which the linear polypropylene-based resin (a) is a random copolymer including a propylene unit and at least one type of comonomer unit which are randomly bound to each other, the at least one type of comonomer unit being selected from the group consisting of ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene.

<7> The method described in any one of <4> to <6>, in which the linear polypropylene-based resin (a) has an MFR of 0.5 g/10 minutes to 22.0 g/10 minutes.

<8> The method described in any one of <4> to <7>, in which the at least one type of monomer N (b) includes isoprene.

<9> The method described in any one of <4> to <8>, in which the at least one type of monomer N (b) is used in the first melting and kneading step in an amount of 0.01 parts by weight to 5.00 parts by weight relative to 100 parts by weight of the linear polypropylene-based resin (a).

<10> The method described in any one of <4> to <9>, in which the radical polymerization initiator (c) includes at least one selected from the group consisting of t-butylperoxy isopropyl carbonate and t-butyl peroxybenzoate.

<11> The method described in any one of <4> to <10>, in which the radical polymerization initiator (c) is used in the first melting and kneading step in an amount of 0.01 parts by weight to 5.00 parts by weight relative to 100 parts by weight of the linear polypropylene-based resin (a).

<12> The method described in any one of <4> to <11>, in which a ratio of the amount of the at least one type of monomer N (b) used to the amount of the radical polymerization initiator (c) used (the amount of the at least one type of monomer N (b) used / the amount of the radical polymerization initiator (c) used) is 0.05 to 5.00 in the first melting and kneading step.

<13> The method described in any one of <4> to <12>, in which the blowing agent includes carbon dioxide, and the blowing agent is used in the second melting and kneading step in an amount of 0.5 parts by weight to 7.0 parts by weight relative to 100.0 parts by weight of the second mixture.

<14> The method described in any one of <4> to <13>, in which the first melting and kneading step is a step of melting and kneading the first mixture with use of a twin screw extruder.

<15> A polypropylene-based resin foamed molded product produced by molding either the polypropylene-based resin extruded expanded particles described in any one of <1> to <3> or polypropylene-based resin extruded expanded particles obtained by the method described in any one of <4> to <14>, the polypropylene-based resin extruded expanded particles having an open cell ratio of not more than 15.0%, the polypropylene-based resin foamed molded product having a density (X) of 60 g/L to 300 g/L and a tensile elongation at break (Y) which satisfies Formula (1) below:

$$Y > 0.005 \times X^2 - 0.25 \times X + 38 \cdots (1)$$

<16> A polypropylene-based resin foamed molded product including extruded expanded particles which include a base resin that contains a polypropylene-based resin having a branched structure, the extruded expanded particles having an open cell ratio of not more than 15.0%, the polypropylene-based resin foamed molded product having a density (X) of 60 g/L to 300 g/L and a tensile elongation at break (Y) which satisfies Formula (1) below:

$$Y > 0.005 \times X^2 - 0.25 \times X + 38 \cdots (1)$$

Examples

An embodiment of the present invention will be described in more detail through Examples. Note that the present invention is not limited to Examples below.

(Test methods)

The test methods used to measure and evaluate various physical properties in Examples and Comparative Examples are as follows.

A reversion resin is used as a sample and the melting point, the melt elongation, and the MFR thereof were measured. The reversion resin was obtained by reversion-to-resin of the extruded expanded particles obtained in each of Examples and Comparative Examples through the method below. The respective values obtained as a result of the measurement were used as the melting point Tmi, the melt elongation, and the MFR of the base resin.

(Reversion-to-resin)

The following (b1) to (b5) were carried out in sequence, so that reversion-to-resin was carried out: (b1) the extruded expanded particles obtained in each of Examples and Comparative Examples were put in a dryer having a temperature adjusted to 160°C; (b2) subsequently, the pressure inside the dryer was reduced to -0.05 MPa (gage pressure) to -0.10 MPa (gage pressure) over 5 to 10 minutes with use of a vacuum pump; (b3) thereafter, the extruded expanded particles were left to stand in the dryer for 30 minutes for preparation of a mass of resin (reversion resin); (b4) subsequently, the temperature in the dryer was cooled to room temperature, and the pressure in the dryer was then returned to normal pressure; and (b5) thereafter, the mass of resin was taken out of the dryer. The reversion resin obtained in the manner described above and without any change, or a resin obtained by cutting, as necessary, the reversion resin into smaller pieces with scissors was used as a sample for measuring various physical properties.

[Melting point ($Tm_1$) of base resin]

The melting point $Tm_1$ of the base resin was determined by measurement through differential scanning calorimetry with the reversion resin being used as a sample. As a differential scanning calorimeter, a DSC6200 type available from Seiko Instruments Inc. was used. The method for measuring the melting point $Tm_1$ of the base resin by differential scanning calorimetry was as follows: (1) the temperature of the sample (reversion resin) was increased from 40°C to 220°C at a temperature increase rate of 10°C/minute so that the sample was melted; (2) thereafter, the temperature of the sample obtained was decreased from 220°C to 40°C at a temperature decrease rate of 10°C/minute so that the sample was crystallized. (3) thereafter, the temperature of the sample crystallized was further increased from 40°C to 220°C at a temperature increase rate of 10°C/minute. The temperature corresponding to the peak (melting peak) in a DSC-curve of the sample (reversion resin) obtained in the second temperature increase (i.e., in (3)) was determined as being the melting point $Tm_1$ of the base resin. The results are shown in Tables 1 and 2.

[Melt elongation in melt tension measurement]

The melt elongation of the base resin was determined by melt tension measurement at 230°C with the reversion resin being used as the sample. Used as a device for use in the melt tension measurement was a Capilograph (manufactured by TOYO SEIKI SEISAKU-SHO, LTD) which is equipped with an attachment for melt tension measurement, which is equipped, at the front end thereof, with an orifice having a hole diameter ($\varphi$) of 1 mm and a length of 10 mm, and which includes a cylinder having a diameter ($\varphi$) of 10 mm. The method for measuring the melt elongation of the base resin with use of the device was as follows: (1) the cylinder, set at 230°C, of a Capilograph was filled with the sample (reversion resin); (2) the sample with which the cylinder was filled was left to stand in the cylinder for 5 minutes, and the sample was heated (preheated); (3) thereafter, a piston was lowered at a piston lowering speed of 10 mm/minute so that the sample was discharged in the form of a strand through the orifice; (4) the sample discharged in the form of a strand was pulled over a pulley which had a load cell and which was installed 350 mm below the orifice, and drawing of the sample was started with a speed of 1 m/minute; (5) after the drawing of the sample became stable, the drawing speed of the sample was increased at a constant rate such that the drawing speed was increased over 4 minutes from 1 m/min to reach 200 m/min; (6) record the drawing speed at the moment at which the reversion resin in the form of a strand broke; (7) the same operations were repeated 4 more times (5 times in total), and the arithmetic mean value of the drawing speeds for n=5 was determined as being the melt elongation of the base material.

[MFR]

The MFR of the base resin was determined by measurement carried out: with use of the reversion resin as a sample; in compliance with the conditions of Procedure B described in ISO 1133 (1997); with use of Melt Indexer S-01 (manufactured by TOYO SEIKI SEISAKU-SHO, LTD); and under the conditions that were a temperature of 230°C and a load of 2.16 kg. The MFR of the base resin was determined as being the value obtained by conversion into the weight of the sample discharged through an orifice per 10 minutes on the basis of: a distance obtained by measurement of the travel distance of the piston of the Melt Indexer S-01 during a certain period of time; and the density of the sample (reversion resin) at the temperature of the measurement. Note that the certain period of time was defined as 120 seconds in a case where the melt flow rate was more than 0.1 g/10 minutes and not more than 1.0 g/10 minutes, 60 seconds in a case where the melt flow rate was more than 1.0 g/10 minutes and not more than 3.5 g/10 minutes, or 30 seconds in a case where the melt flow rate was more than 3.5 g/10 minutes and not more than 30.0 g/10 minutes.

[DSC curve of extruded expanded particles]

With use of a differential scanning calorimeter (DSC6200 type available from Seiko Instruments Inc.), the temperature of 5 mg to 6 mg of the polypropylene-based resin extruded expanded particles was increased from 40°C to 220°C at a temperature increase rate of 10°C/minute. The DSC curve obtained during the temperature increase was determined as being the DSC curve of the polypropylene-based resin extruded expanded particles.

[Bulk density of extruded expanded particles]

The bulk density of the polypropylene-based resin extruded expanded particles was calculated by carrying out the following (1) to (3) in sequence: (1) a measuring cup having an inner capacity Vk (L) which was precisely measured in advance and which was approximately 1 L was filled with the polypropylene-based resin extruded expanded particles to the brim; (2) the powder surface (the top surface) of the container is leveled, and the weight Wb (g) of the polypropylene-based resin extruded expanded particles inside the container was measured; and (3) the bulk density of the polypropylene-based resin extruded expanded particles was calculated from the following formula:

$$\mathrm{Bulk\ density\ (g/L)\ =\ weight\ Wb\ (g)\ of\ expanded\ particles\ /}$$

$$\mathrm{volume\ Vk\ (L)\ of\ container.}$$

[Open cell ratio]

The open cell ratio of the polypropylene-based resin extruded expanded particles was determined by measurement with use of an air-comparison pycnometer [Model 1000, available from TOKYO SCIENCE CO., LTD.] in accordance with the methods described in PROCEDURE C of ASTM D2856-87. More specifically, the open cell ratio of the extruded expanded particles was calculated by carrying out the following (1) to (3) in sequence: (1) the volume Vc (cm$^3$) of the extruded expanded particles was measured with use of the air-comparison pycnometer; (2) subsequently, all of the extruded expanded particles after the measurement of the Vc were submerged in ethanol contained in a graduated cylinder; (3) thereafter, the apparent volume Va (cm$^3$) of the extruded expanded particles was determined from the amount of increase in the position of the ethanol in the graduated cylinder; and (4) the open cell ratio of the extruded expanded particles was calculated by the following formula:

$$\mathrm{Open\ cell\ ratio\ (\%)\ =\ ((Va\ -\ Vc)\ \times\ 100)\ /\ Va.}$$

[The density (X) of foamed molded product]

The density (X) of the polypropylene-based resin foamed molded product obtained was calculated by carrying out the following (1) to (3) in sequence: (1) the weight Ws (g) of the foamed molded product was measured; (2) the length, width, and thickness of the foamed molded product were measured with use of a vernier caliper, and the volume Vs (cm$^3$) of the foamed molded product was calculated; and (3) the density of the foamed molded product was calculated from the following formula:

$$\text{Density (X) (g/L) of foamed molded product} = Ws / Vs \times 1000.$$

[Tensile elongation at break (Y)]

The tensile elongation at break (Y) (%) of the polypropylene-based resin foamed molded product obtained was determined from the results of a tensile test carried out in accordance with ISO 1798, with the use of the foamed molded product as a sample. Specifically, in the tensile test with use of the sample, the value of the tensile elongation at the time of break of the sample was measured, and the measurement value was determined as being the tensile elongation at break (Y) (%) of the foamed molded product. The results are shown in Tables 1 and 2.

[Evaluation of resistance to breakage]

On the basis of the tensile elongation at break obtained by the measurement method, the resistance of each foamed molded product to breakage was evaluated by the following criteria. The results are shown in Tables 1 and 2.
Good: $Y > 0.0005 \times X^2 - 0.25 \times X + 38$ is satisfied, where X (g/L) is the density of the foamed molded product and Y(%) is the tensile elongation at break of the foamed molded product.
Poor: $Y > 0.0005 \times X^2 - 0.25 \times X + 38$ is not satisfied, where X (g/L) is the density of the foamed molded product and Y(%) is the tensile elongation at break of the foamed molded product.

(Materials)

The following materials were used in Examples and Comparative Examples.

(Linear polypropylene-based resin)

PP-1; Random polypropylene (F-744NP) (melting point 133.8, MFR 7.0) available from Prime Polymer Co., Ltd.
PP-2; Random polypropylene (E237J) (melting point 140.3, MFR 7.0) available from Prime Polymer Co., Ltd
PP-3; Random polypropylene (F227D) (melting point 139.8, MFR 7.0) available from Prime Polymer Co., Ltd
PP-4; Random polypropylene (F-724NPC) (melting point 148.8, MFR 7.0) available from Prime Polymer Co., Ltd
PP-5; Random polypropylene (E309M) (melting point 148.5, MFR 9.0) available from Prime Polymer Co., Ltd
PP-6; Random polypropylene (E228) (melting point 144.3, MFR 9.0) available from Prime Polymer Co., Ltd
PP-7; Random polypropylene (B241) (melting point 140.5, MFR 0.5) available from Prime Polymer Co., Ltd
(Monomer N (conjugated diene, etc.))
Isoprene
(Radical polymerization initiator)
T-Butylperoxy isopropyl carbonate (PERBUTYL I available from NOF CORPORATION)
(Cell nucleus adjusting agent)
Talc (PK-S available from Hayashi-Kasei Co., Ltd.)

(Example 1)

(Preparation step)

Supplied through a hopper at 70 kg/hour to a 45-mm φ twin screw extruder (L/D = 40) was a mixture of: 100 parts by weight PP-1 (a random polypropylene available from Prime Polymer Co., Ltd (F-744NP, melting point $Tm_2$ measured by the above method: 133.8°C)) as the linear polypropylene-based resin (a); and (c) 1.0 parts by weight t-butylperoxy isopropyl carbonate (PERBUTYL I available from NOF CORPORATION) as the radical polymerization initiator (c). Subsequently, while the raw material in the extruder was melted and kneaded at a cylinder temperature of 200°C and at a rotational speed of 150 rpm, isoprene which is the conjugated diene was supplied as the monomer (b) from an injection portion provided in the middle part of the extruder, in a ratio of 0.3 parts by weight isoprene to 100 parts by weight of the linear polypropylene-based resin (a), with use of a metering pump, so that a first mixture was prepared (completed) in the extruder (first mixture preparation step). Subsequently, the first mixture in the extruder was further melted and kneaded, and the melted and kneaded product of the first mixture, that is, a branched polypropylene-based resin was thus obtained (first melting and kneading step). Thereafter, the branched polypropylene-based resin was discharged in the form of a strand through a die provided in the device. Subsequently, the polypropylene-based resin discharged in the form of a strand was cooled with water and cut into small pieces, so that pellets of the branched polypropylene-based resin were obtained (discharge step).

(Extrusion-expansion step)

Next, a mixture (second mixture) in which mixed together were 100 parts by weight of the branched polypropylene-based resin obtained and 0.2 parts by weight talc (PK-S available from Hayashi-Kasei Co., Ltd.) was supplied to a 15 mm φ twin screw extruder (L/D = 30) at 1.0 kg/hour through the hopper. Subsequently, while the second mixture in the extruder was melted and kneaded at a cylinder temperature of 200°C and a rotational speed of 100 rpm, carbon dioxide which is the blowing agent was supplied from the injection portion provided in the middle part of the extruder, in a ratio of 1.7 parts by weight carbon dioxide to 100 parts by weight of the polypropylene-based resin, with use of a metering pump, so that a composition was prepared (completed) in the extruder. Subsequently, the composition in the extruder was further melted and kneaded, so that obtain the melted and kneaded product of the composition was obtained (second melting and kneading step).

Further, the melted and kneaded product of the composition was caused to pass through a static mixer connected to the front end of the twin screw extruder and set at 155°C, so that the melted and kneaded product was cooled. Thereafter, while being extruded through a die to a region the pressure of which is atmospheric pressure to be expanded, the die being provided with two small holes having a diameter of 0.7 mm and being attached to the front end of the static mixer (extrusion step), the melted and kneaded product of the composition was cut with use of a rotating cutter attached to the front end of the die (cut step). Though such a series of operations, polypropylene-based resin extruded expanded particles were obtained.

With use of the extruded expanded particles obtained, the melting point $Tm_1$, the melt elongation, and the MFRs of the base resin were measured by the above-described methods. The results are shown in Table 1. In addition, the bulk density and the open cell ratio of the extruded expanded particles obtained were evaluated by the above-described methods. The results are shown in Table 1.

Further, as to the extruded expanded particles, with use of a molding machine (KD345) manufactured by DAISEN Co., Ltd., a block-shaped mold (400 mm in length × 300 mm in width × variable thickness) was adjusted so as to have a thickness of 52 mm (gap-in-mold rate of 30%), and the mold was filled with the polypropylene-based resin pre-expanded particles obtained. The mold was then compressed so that the thickness thereof was 40 mm. Subsequently, the air inside the mold was expelled with use of steam at 0.1 MPa (gage pressure), and thereafter, heat-molding was carried out for 10 seconds with use of steam at 0.20 MPa (gage pressure), so that a polypropylene-based resin foamed molded product was obtained.

With use of the foamed molded product obtained that was cured in a curing chamber at 75°C for 24 hours and then left to stand at room temperature for 4 hours, the density (X) and the tensile elongation at break (Y) of the foamed molded product were measured by the above-described methods, and the resistance of the foamed molded product to breakage was evaluated. The results are shown in Table 1.

(Examples 2 to 5 and Comparative Examples 1 to 8)

Pellets of the branched polypropylene-based resin were obtained as in Example 1 except that the resins shown in Table 1 or 2 were used as the linear polypropylene-based resin (a), and the amounts of the radical polymerization initiator (c) and the conjugated diene-based monomer (b) (isoprene) were changed as described in Table 1 or 2.

Next, polypropylene-based resin extruded expanded particles were obtained as in Example 1 except that the branched polypropylene-based resin was changed from that used in Example 1 to the branched polypropylene-based resin obtained in each of Examples and Comparative Examples. Note that, in Comparative Examples 6 and 8, the melted and kneaded product extruded through the die did not expand sufficiently, and therefore, subsequent evaluations were not carried out.

(Example 6)

Polypropylene-based resin extruded expanded particles were obtained as in Example 1 except that the amount of carbon dioxide (the blowing agent) used was changed to 1.0 parts by weight relative to 100 parts by weight of the polypropylene-based resin.

(Comparative Example 9)

Polypropylene-based resin extruded expanded particles were obtained as in Example 1 except that the branched polypropylene-based resin was changed from that used in Example 1 to that obtained in Comparative Example 1, and the amount of carbon dioxide (the blowing agent) used was changed to 1.0 parts by weight relative to 100 parts by weight of the polypropylene-based resin.

(Comparative Example 10)

Polypropylene-based resin extruded expanded particles were obtained as in Example 1 except that the branched polypropylene-based resin was changed to that used in Example 1 to that obtained in Comparative Example 3, and the amount of carbon dioxide (the blowing agent) was changed to 1.0 parts by weight relative to 100 parts by weight of the polypropylene-based resin.

In Examples 2 to 6 and Comparative Examples 1 to 10, the melting point $Tm_1$, the melt elongation, and the MFR of the base resin were measured by the above-described methods, as in Example 1, with use of the extruded expanded particles obtained. The results are shown in Table 1 or 2. In addition, the bulk density and the open cell ratio of the extruded expanded particles obtained were evaluated by the above-described methods, as in Example 1. The results are shown in Table 1 or 2.

In Examples 2 to 6 and Comparative Examples 1 to 10, with use of the extruded expanded particles obtained, polypropylene-based resin foamed molded products were further obtained as in Examples 1 except that the respective molding pressures were changed as shown in Table 1 or 2. Subsequently, with use of the foamed molded products that were cured and left to stand at room temperature as in Example 1, the density (X) and the tensile elongation at break (Y) of each of the foamed molded products were measured and the resistance to breakage of each of the foamed molded products was evaluated, as in Example 1. The results are shown in Table 1 or 2. Note that, in Comparative Examples 5 and 7, the extruded expanded particles obtained did not expand sufficiently and a satisfactory foamed molded product could not be obtained, accordingly. Therefore, subsequent evaluations were not carried out.

In addition, in all of Examples 1 to 6, the DSC curve of the reversion resin of the extruded expanded particles had a single melting peak. That is to say, in the DSC curve of the reversion resin of the extruded expanded particles of each of Examples 1 to 6, the quantity of melting heat of the peak, at which the quantity of melting heat is the greatest, was equal to the total quantity of melting heat.

In addition, in all of Examples 1 to 6, the DSC curve of the extruded expanded particles has a single peak which indicates the quantity of heat accounting for not less than 15% of the total quantity of melting heat (100%), that is, there was a single crystallization peak.

[Table 1]

(Table 1)

| | | | Example 1 | Example 2 | Example 3 | Example 4 | Example 5 | Example 6 |
|---|---|---|---|---|---|---|---|---|
| Formulation of modified polypropylene-based resin | Linear polypropylene-based resin (a) | Type | PP-1 | PP-2 | PP-3 | PP-3 | PP-3 | PP-1 |
| | | Parts by weight | 100 | 100 | 100 | 100 | 100 | 100 |
| | Conjugated diene monomer (b) | Parts by weight | 0.3 | 0.4 | 0.3 | 0.4 | 0.4 | 0.3 |
| | Radical polymerization initiator (c) | Parts by weight | 1.0 | 1.0 | 0.75 | 1.0 | 1.4 | 1.0 |
| Physical properties of base resin (resin obtained by reversion-to-resin of extruded expanded particles) | MFR | (g/ 10 minutes) | 2.7 | 2.6 | 2.4 | 2.2 | 2.6 | 2.5 |
| | Melting point $Tm_1$ | (°C) | 133.7 | 142.5 | 142.1 | 141.8 | 141.2 | 133.7 |
| | Melt elongation | (m/ minute) | 8.9 | 9.4 | 15.6 | 8.2 | 7.2 | 8.8 |
| Physical properties of extruded expanded particles | Open cell ratio | (%) | 5.8 | 4.8 | 7.2 | 0.6 | 0.6 | 9.8 |
| | Bulk density | (g/L) | 63 | 64 | 61 | 63 | 66 | 121 |
| Physical properties of foamed molded product | Molding pressure | (MPa) | 0.20 | 0.22 | 0.22 | 0.22 | 0.22 | 0.20 |
| | Density (X) | (g/L) | 80 | 81 | 78 | 82 | 84 | 148 |
| | Tensile elongation at break (Y) | (%) | 28 | 26 | 27 | 25 | 24 | 20 |
| | Resistance to breakage | - | Good | Good | Good | Good | Good | Good |

[Table 2]

Table 2

| | | | Comp Ex 1 | Comp Ex 2 | Comp Ex 3 | Comp Ex 4 | Comp Ex 5 | Comp Ex 6 | Comp Ex 7 | Comp Ex 8 | Comp Ex 9 | Comp Ex 10 |
|---|---|---|---|---|---|---|---|---|---|---|---|---|
| Formulation of modified polypropylene -based resin | Linear polypropylene -based resin (a) | Type | PP-4 | PP-5 | PP-6 | PP-6 | PP-3 | PP-7 | PP-3 | PP-3 | PP-4 | PP-6 |
| | | Parts by weight | 100 | 100 | 100 | 100 | 100 | 100 | 100 | 100 | 100 | 100 |
| | Conjugated diene monomer (b) | Parts by weight | 0.4 | 0.5 | 0.4 | 0.6 | 0.3 | 0.4 | 0.6 | 0.25 | 0.4 | 0.4 |
| | Radical polymerization initiator (c) | Parts by weight | 1.0 | 1.0 | 1.0 | 1.1 | 0.50 | 1.0 | 1.0 | 1.0 | 1.0 | 1.0 |
| Physical properties of base resin (resin obtained by reversion-to-resin of extruded expanded particles) | MFR | (g/ 10 minutes) | 2.8 | 3.9 | 3.1 | 2.4 | 3.3 | 0.3 | 0.6 | 23.0 | 2.7 | 2.9 |
| | Melting point $Tm_1$ | (°C) | 149.1 | 147.4 | 144.5 | 144.1 | 142.8 | 138.1 | 141.2 | 142.4 | 149.2 | 144.5 |
| | Melt elongation | (m/ minute) | 9.0 | 10.5 | 9.8 | 8.4 | 42.2 | 4.4 | 2.2 | 58.2 | 8.8 | 9.6 |
| Physical properties of extruded expanded particles | Open cell ratio | (%) | 0.5 | 5.5 | 2.5 | 2.4 | 42.8 | (Not expanded | 18.0 | (Not expanded | 9.4 | 11.2 |
| | Bulk density | (g/L) | 65 | 61 | 64 | 67 | 72 | (Not expanded | 84 | (Not expanded | 124 | 128 |
| Physical properties of foamed molded product | Molding pressure | (MPa) | 0.24 | 0.24 | 0.22 | 0.22 | 0.22 | - | 0.22 | - | 0.24 | 0.22 |
| | Density (X) | (g/L) | 79 | 80 | 81 | 79 | (Not moldable | - | (Not moldable | - | 151 | 154 |
| | Tensile elongation at break (Y) | (%) | 17 | 18 | 19 | 17 | - (Not moldable | - | - (Not moldable | - | 9 | 10 |
| | Resistance to breakage | - | Poor | Poor | Poor | Poor | (Not moldable | - | (Not moldable | - | Poor | Poor |

EP 4 279 539 A1

The results shown in Table 1 shows the following: when the linear polypropylene-based resin (a) has a specific $Tm_2$ and the base resin (A) has a melting point Tmi, a melt elongation, and an MFR that are within the scope of an embodiment of the present invention due to the blend of the initiator and isoprene that are used in the modification, the extruded expanded particles indicated in Examples have a low open cell ratio and the foamed molded product produced by molding the extruded expanded particles has better resistance to breakage.

In contrast, in Comparative Examples 1 to 4 and 7 to 8, in which the melting point $Tm_1$ falls outside the scope of an embodiment of the present invention, it is found that the foamed molded product has poor resistance to breakage.

In Comparative Example 5, in which the amount of the initiator used in the modification is low and the degree of the modification is therefore insufficient, it is found that the open cell ratio of the extruded expanded particles is high and this high open cell ratio prevents satisfactory molding.

Further, in Comparative Example 6, in which the MFR of the modified polypropylene-based resin falls outside the scope of an embodiment of the present invention so as to be lower, it is found that obtaining good extruded expanded particles itself is impossible.

Further, in Comparative Example 7, in which the MFR and the melt elongation of the modified polypropylene-based resin fall outside the scope of an embodiment of the present invention, it is found that the open cell ratio of the extruded expanded particles are high and this high open cell ratio prevents satisfactory molding.

Furthermore, in Comparative Example 8, in which the MFR and the melt elongation of the modified polypropylene-based resin fall outside the scope of an embodiment of the present invention, it is found that obtaining good extruded expanded particles itself is impossible.

Industrial Applicability

An embodiment of the present invention makes it possible to provide polypropylene-based resin extruded expanded particles capable of providing a polypropylene-based resin foamed molded product having excellent resistance to breakage. Therefore, an embodiment of the present invention can be suitably used in the fields of, for example, automotive interior materials, shock-absorbing materials, packaging materials, and heat insulating materials.

**Claims**

1. Polypropylene-based resin extruded expanded particles comprising

   a base resin that contains a polypropylene-based resin having a branched structure, the base resin having all of the following (i) to (iii):

   (i) a melting point $Tm_1$ of not less than 130.0°C and less than 143.0°C,
   the melting point $Tm_1$ being determined by measurement through differential scanning calorimetry;
   (ii) a melt elongation of 3.0 m/min to 30.0 m/min,
   the melt elongation being determined by melt tension measurement at 230°C; and
   (iii) a melt flow rate (MFR) of 1.0 g/10 minutes to 20.0 g/ 10 minutes,

   the MFR being determined by measurement carried out under conditions that are a temperature of 230°C and a load of 2.16 kg, in accordance with ISO1133.

2. The polypropylene-based resin extruded expanded particles according to claim 1, wherein
   the polypropylene-based resin extruded expanded particles have the following (iv) and (v):

   (iv) a bulk density of 45 g/L to 600 g/L; and
   (v) an open cell ratio of not more than 10.0%.

3. The polypropylene-based resin extruded expanded particles according to claim 1 or 2, wherein
   the polypropylene-based resin having a branched structure includes a structural unit derived from at least one type of monomer N selected from the group consisting of a conjugated diene and a vinyl aromatic compound.

4. A method for producing the polypropylene-based resin extruded expanded particles according to any one of claims 1 to 3, the method comprising:

   a preparation step of preparing a polypropylene-based resin having a branched structure; and

an extrusion-expansion step of preparing the polypropylene-based resin extruded expanded particles,

the preparation step including a first melting and kneading step of melting and kneading a first mixture that includes a linear polypropylene-based resin (a), at least one type of monomer N (b) selected from the group consisting of a conjugated diene and a vinyl aromatic compound, and a radical polymerization initiator (c),

the extrusion-expansion step including a second melting and kneading step of melting and kneading a composition that includes a second mixture and a blowing agent, the second mixture including the polypropylene-based resin having a branched structure.

5. The method according to claim 4, wherein
the linear polypropylene-based resin (a) has a melting point $Tm_2$ of 125.0°C to 148.0°C.

6. The method according to claim 4 or 5, wherein
the linear polypropylene-based resin (a) is a random copolymer including a propylene unit and at least one type of comonomer unit which are randomly bound to each other, the at least one type of comonomer unit being selected from the group consisting of ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene.

7. The method according to any one of claims 4 to 6, wherein
the linear polypropylene-based resin (a) has an MFR of 0.5 g/10 minutes to 22.0 g/10 minutes.

8. The method according to any one of claims 4 to 7, wherein
the at least one type of monomer N (b) includes isoprene.

9. The method according to any one of claims 4 to 8, wherein
the at least one type of monomer N (b) is used in the first melting and kneading step in an amount of 0.01 parts by weight to 5.00 parts by weight relative to 100 parts by weight of the linear polypropylene-based resin (a).

10. The method according to any one of claims 4 to 9, wherein
the radical polymerization initiator (c) includes at least one selected from the group consisting of t-butylperoxy isopropyl carbonate and t-butyl peroxybenzoate.

11. The method according to any one of claims 4 to 10, wherein
the radical polymerization initiator (c) is used in the first melting and kneading step in an amount of 0.01 parts by weight to 5.00 parts by weight relative to 100 parts by weight of the linear polypropylene-based resin (a).

12. The method according to any one of claims 4 to 11, wherein
a ratio of the amount of the at least one type of monomer N (b) used to the amount of the radical polymerization initiator (c) used (the amount of the at least one type of monomer N (b) used / the amount of the radical polymerization initiator (c) used) is 0.05 to 5.00 in the first melting and kneading step.

13. The method according to any one of claims 4 to 12, wherein
the blowing agent includes carbon dioxide, and the blowing agent is used in the second melting and kneading step in an amount of 0.5 parts by weight to 7.0 parts by weight relative to 100.0 parts by weight of the second mixture.

14. The method according to any one of claims 4 to 13, wherein
the first melting and kneading step is a step of melting and kneading the first mixture with use of a twin screw extruder.

15. A polypropylene-based resin foamed molded product produced by molding either the polypropylene-based resin extruded expanded particles according to any one of claims 1 to 3 or polypropylene-based resin extruded expanded particles obtained by the method according to any one of claims 4 to 14,

the polypropylene-based resin extruded expanded particles having an open cell ratio of not more than 15.0%,
the polypropylene-based resin foamed molded product having a density (X) of 60 g/L to 300 g/L and
a tensile elongation at break (Y) which satisfies Formula (1) below:

$$Y > 0.005 \times X^2 - 0.25 \times X + 38 \cdots (1)$$

16. A polypropylene-based resin foamed molded product comprising extruded expanded particles which include a base resin that contains a polypropylene-based resin having a branched structure,

the extruded expanded particles having an open cell ratio of not more than 15.0%,
the polypropylene-based resin foamed molded product having a density (X) of 60 g/L to 300 g/L and
a tensile elongation at break (Y) which satisfies Formula (1) below:

$$Y > 0.005 \times X^2 - 0.25 \times X + 38 \cdots (1)$$

**EP 4 279 539 A1**

## INTERNATIONAL SEARCH REPORT

| International application No. |
|---|
| **PCT/JP2022/001031** |

### A. CLASSIFICATION OF SUBJECT MATTER

*C08J 9/16*(2006.01)i; *C08L 23/10*(2006.01)i
FI:    C08J9/16 CES; C08L23/10

According to International Patent Classification (IPC) or to both national classification and IPC

### B. FIELDS SEARCHED

Minimum documentation searched (classification system followed by classification symbols)
C08J9/00-9/42; C08L1/00-101/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/004429 A1 (KANEKA CORPORATION) 02 January 2020 (2020-01-02) entire text, all drawings | 1-16 |
| A | JP 2009-256460 A (KANEKA CORPORATION) 05 November 2009 (2009-11-05) entire text, all drawings | 1-16 |
| A | WO 2018/016399 A1 (KANEKA CORPORATION) 25 January 2018 (2018-01-25) entire text, all drawings | 1-16 |
| A | CN 111253677 A (SHANDONG UNIVERSITY) 09 June 2020 (2020-06-09) entire text, all drawings | 1-16 |
| A | CN 111171366 A (SHANDONG UNIVERSITY) 19 May 2020 (2020-05-19) entire text, all drawings | 1-16 |
| P, A | WO 2021/100645 A1 (KANEKA CORPORATION) 27 May 2021 (2021-05-27) entire text, all drawings | 1-16 |
| P, A | WO 2021/172016 A1 (KANEKA CORPORATION) 02 September 2021 (2021-09-02) entire text, all drawings | 1-16 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 February 2022** | **08 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

31

**INTERNATIONAL SEARCH REPORT**

| International application No. |
| --- |
| **PCT/JP2022/001031** |

| C. | DOCUMENTS CONSIDERED TO BE RELEVANT | |
| --- | --- | --- |
| Category* | Citation of document, with indication, where appropriate, of the relevant passages | Relevant to claim No. |
| P, A | WO 2021/131933 A1 (KANEKA CORPORATION) 01 July 2021 (2021-07-01)<br>entire text, all drawings | 1-16 |

Form PCT/ISA/210 (second sheet) (January 2015)

INTERNATIONAL SEARCH REPORT

Information on patent family members

International application No.

**PCT/JP2022/001031**

| Patent document cited in search report | | | Publication date (day/month/year) | Patent family member(s) | | | Publication date (day/month/year) |
|---|---|---|---|---|---|---|---|
| WO | 2020/004429 | A1 | 02 January 2020 | US 2021/0108016 A1 claims, examples, figures EP 3816209 A1 CN 112368322 A | | | |
| JP | 2009-256460 | A | 05 November 2009 | (Family: none) | | | |
| WO | 2018/016399 | A1 | 25 January 2018 | US 2019/0153188 A1 claims, examples, figures EP 3489287 A1 CN 109476868 A | | | |
| CN | 111253677 | A | 09 June 2020 | (Family: none) | | | |
| CN | 111171366 | A | 19 May 2020 | (Family: none) | | | |
| WO | 2021/100645 | A1 | 27 May 2021 | (Family: none) | | | |
| WO | 2021/172016 | A1 | 02 September 2021 | (Family: none) | | | |
| WO | 2021/131933 | A1 | 01 July 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9302131 B
- JP 2009256460 A
- JP 2018016399 A
- WO 2020004429 A
- JP 2002542360 W
- JP H10237212 B